(19)

Europäisches
Patentamt
European
Patent Office
Office européen
des brevets

(11) **EP 2 894 436 A1**

(12) **EUROPEAN PATENT APPLICATION**
published in accordance with Art. 153(4) EPC

(43) Date of publication:
**15.07.2015 Bulletin 2015/29**

(21) Application number: **12883930.5**

(22) Date of filing: **03.09.2012**

(51) Int Cl.:
**G01C 21/34** (2006.01)   **B60L 3/00** (2006.01)
**B60L 11/18** (2006.01)   **G06Q 50/10** (2012.01)
**G08G 1/137** (2006.01)

(86) International application number:
**PCT/JP2012/072306**

(87) International publication number:
**WO 2014/033944 (06.03.2014 Gazette 2014/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Hitachi, Ltd.**
**Tokyo 100-8280 (JP)**

(72) Inventors:
• **IWAMURA, Kazuaki**
**Tokyo 100-8280 (JP)**

• **TONOOKA, Hideki**
**Tokyo 100-8280 (JP)**
• **MASHITA, Yuuichi**
**Tokyo 100-8280 (JP)**
• **SANO, Hideki**
**Tokyo 100-8280 (JP)**

(74) Representative: **Moore, Graeme Patrick et al**
**Mewburn Ellis LLP**
**City Tower**
**40 Basinghall Street**
**London EC2V 5DE (GB)**

(54) **CHARGING SUPPORT SYSTEM AND CHARGING SUPPORT METHOD FOR ELECTRIC VEHICLE**

(57)   An object is to guide an electric vehicle that needs to be charged before reaching a destination to an appropriate charging station and prevent the electric vehicle from stopping due to battery exhaustion. A control center 1 detects a predetermined electric vehicle that needs to be charged to reach a destination from the current location, based on predetermined electric vehicle information acquired from electric vehicles, detects a predetermined charging station available for the predetermined electric vehicle from among a plurality of charging stations, based on predetermined charging station information and predetermined electric vehicle information on the predetermined electric vehicle, detects a predetermined path for guiding the predetermined electric vehicle to the predetermined charging station, and transmits predetermined guidance information including the predetermined path to the predetermined electric vehicle.

FIG. 1

EP 2 894 436 A1

**Description**

[Technical Field]

This invention relates to a charging support system and a charging support method for electric vehicles.

[Background Art]

Charging stations for charging a battery of an electric vehicle (EV) have been started to be deployed worldwide in response to a higher awareness to global environmental issues. As a first conventional technique, a configuration of managing a state of a charging station and transmitting information related to a waiting time to a mobile phone has been disclosed (PLT 1). As a second conventional technique, a configuration of remotely recognizing a state of a charging station and thus determining whether the charging station is available is described (PLT 2). As a third conventional technique, a configuration of managing charging/discharging for each customer and thus recognizing an energy consumption state is disclosed (PLT 3).

[Citation List]

[Patent Literature]

[PTL 1] Japanese Patent Application Publication No. 2010-161912
[PTL 2] Japanese Patent Application Publication No. 2002-123888
[PTL 3] Japanese Patent Application Publication No. 2011-050240

[Summary of Invention]

[Technical Problem]

With the conventional techniques, the information related to charging/discharging, such as available information on the charging station, can be managed. However, none of the conventional techniques discloses a configuration of guiding an electric vehicle based on a remaining amount of power so that battery exhaustion will not occur in the electric vehicle.

The present invention is made in view of the above problem and an object of the present invention is to provide a charging support system and a charging support method for electric vehicles for performing guidance to an appropriate charging station in accordance with a travel state of an electric vehicle to prevent the electric vehicle from stopping due to battery exhaustion.

[Solution to Problem]

To solve the problem described above, a charging support system for an electric vehicle according to the present invention is configured to: acquire predetermined electric vehicle information related to a travel state of the vehicle from among a plurality of electric vehicles; acquire predetermined charging station information related to a device state and a use state of the vehicle from among a plurality of charging stations; detect a predetermined electric vehicle that needs to be charged to reach a destination from a current location, based on the predetermined electric vehicle information acquired from each of the plurality of the electric vehicles; detect a predetermined charging station available for the predetermined electric vehicle from among the plurality of the charging stations, based on the predetermined charging station information and the predetermined electric vehicle information; detect a predetermined path for guiding the predetermined electric vehicle to the predetermined charging station; and transmit predetermined guidance information including the predetermined path to the predetermined electric vehicle.

A use schedule according to which the predetermined electric vehicle is charged at the predetermined charging station may be generated, and then transmitted to the predetermined electric vehicle and the predetermined charging station.

[Brief Description of Drawings]

[Fig. 1]

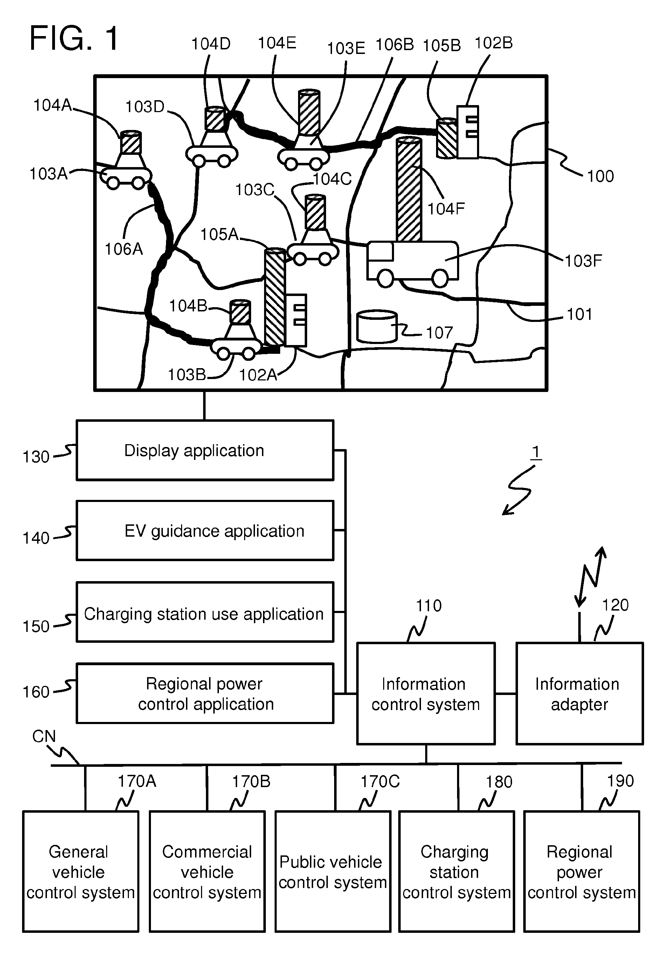

Fig. 1 is view for illustrating an overview of a control center system for supporting charging of an electric vehicle (EV).
[Fig. 2]

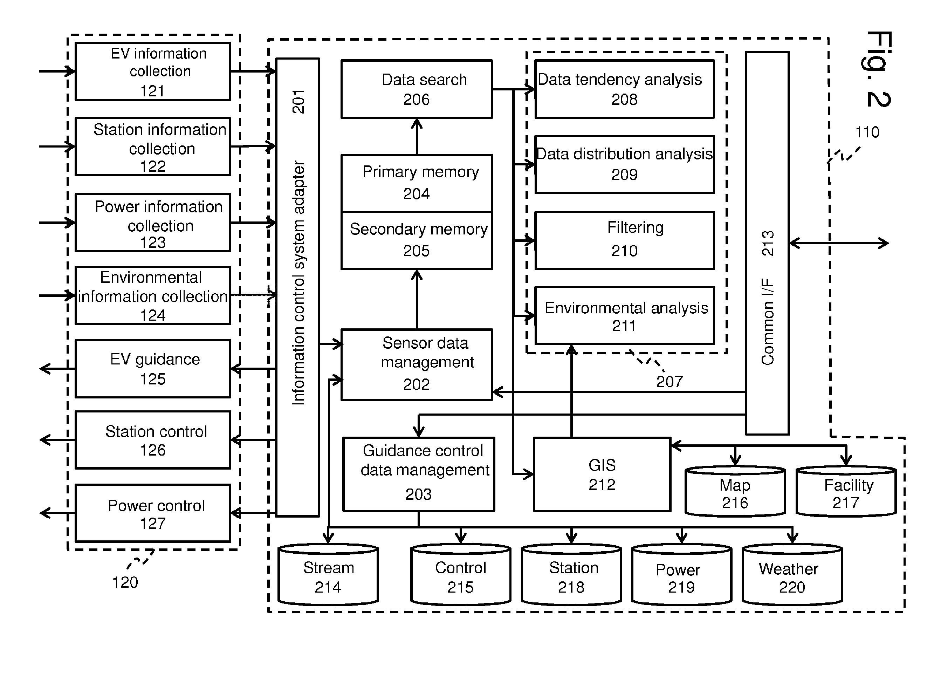

Fig. 2 is a view for illustrating functional configurations of an adapter system and an information control system.
[Fig. 3]

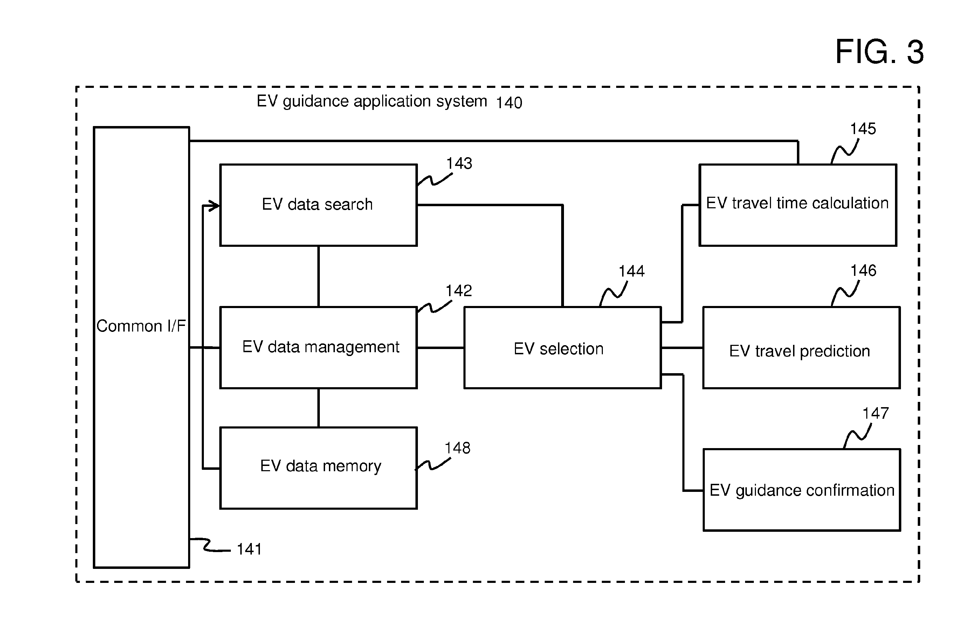

Fig. 3 is a view for illustrating a functional configuration of an EV guidance application system.
[Fig. 4]

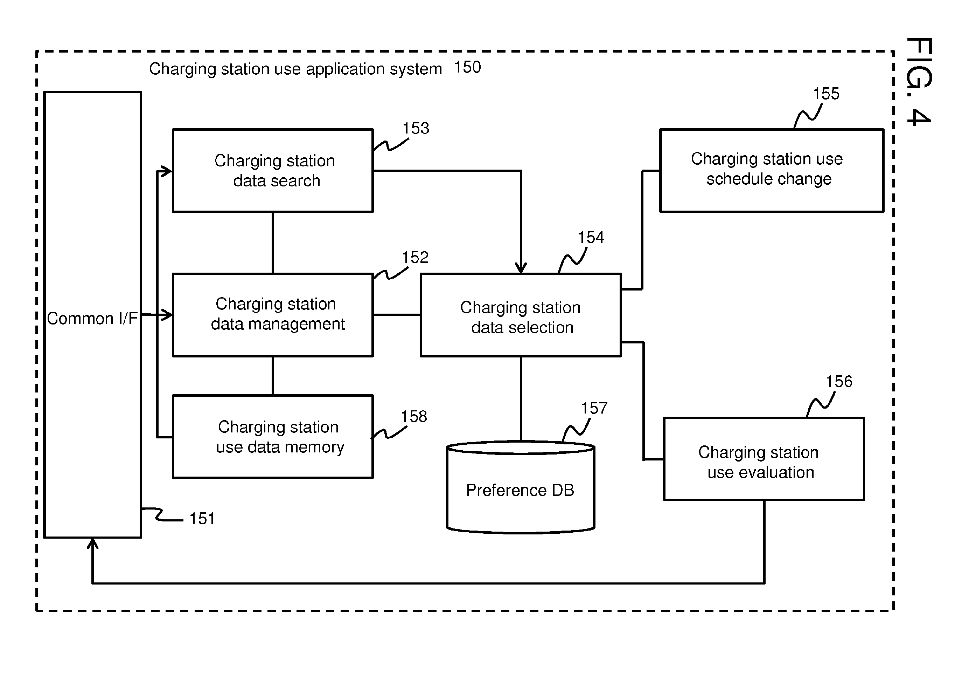

Fig. 4 is a view for illustrating a functional configuration of a charging station use application system.
[Fig. 5]

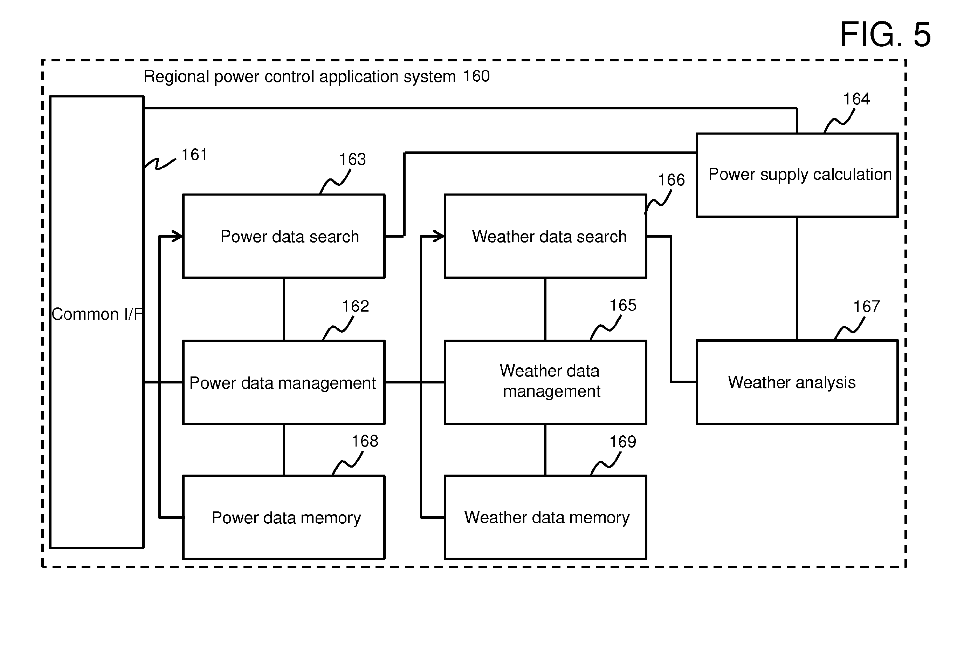

Fig. 5 is a view for illustrating a functional configuration of a regional power control application system.
[Fig. 6]

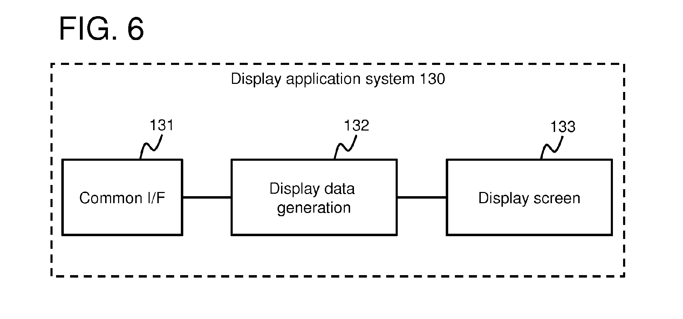

Fig. 6 is a view for illustrating a functional configuration of a display application system.
[Fig. 7]

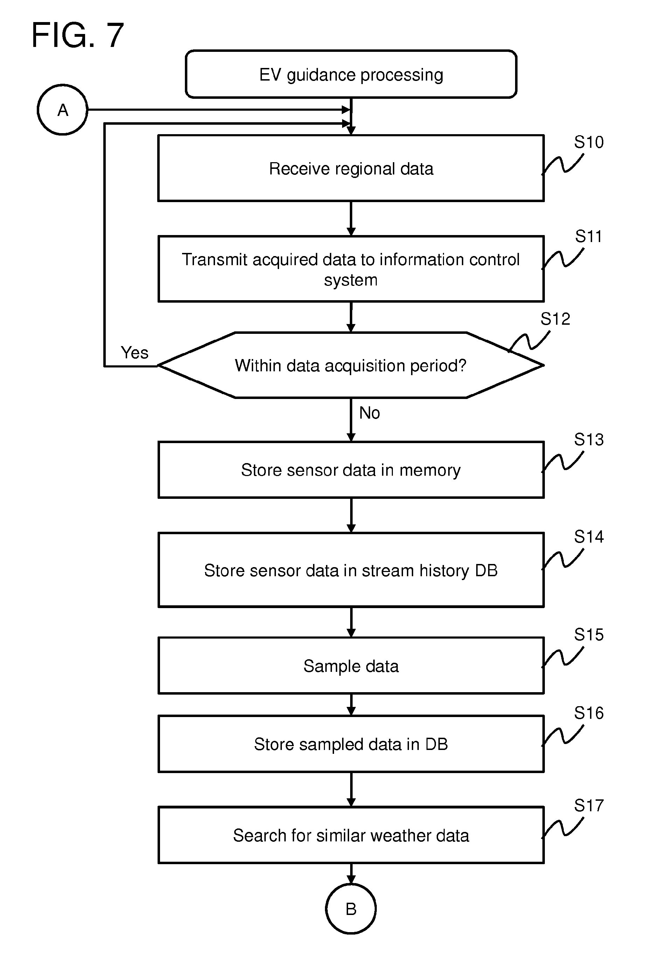

Fig. 7 a flowchart illustrating processing for guiding an electric vehicle.
[Fig. 8]

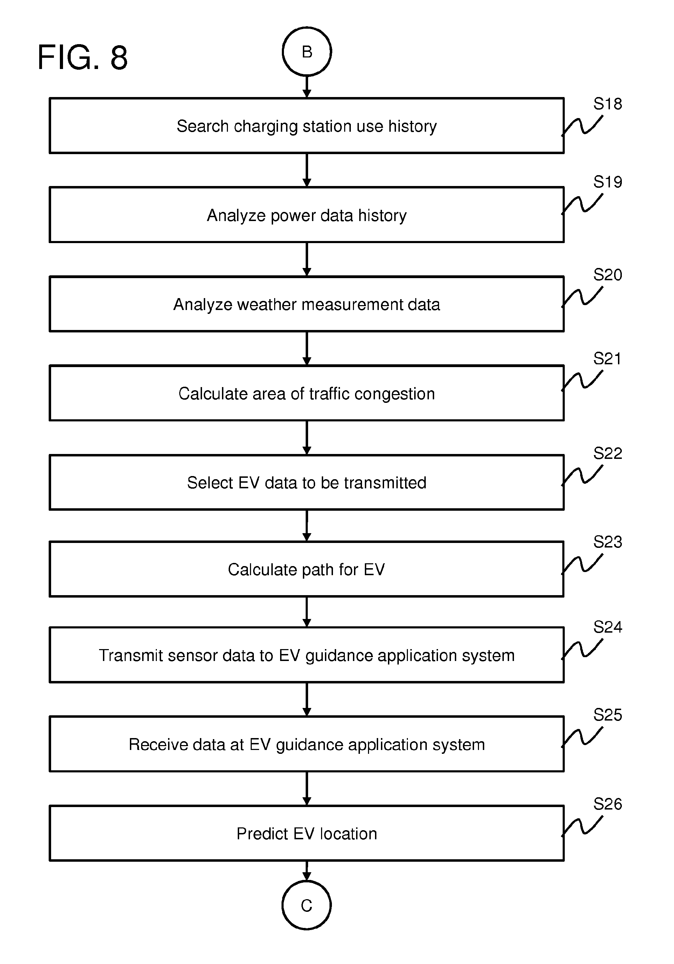

Fig. 8 is a flowchart illustrating processing that follows Fig. 7.
[Fig. 9]

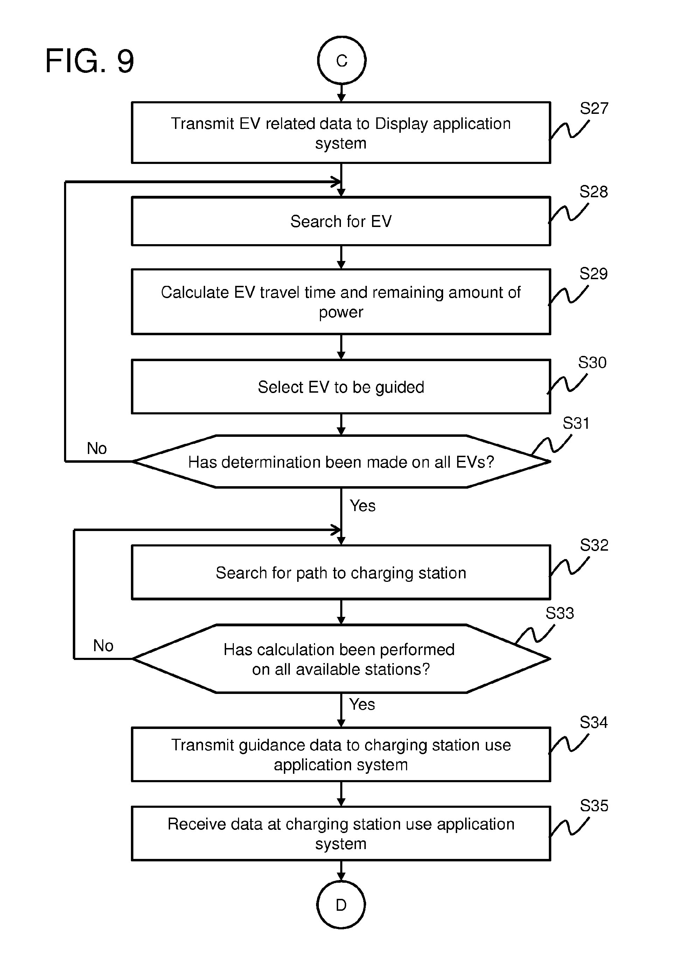

Fig. 9 is a flowchart illustrating processing that follows Fig. 8.
[Fig. 10]

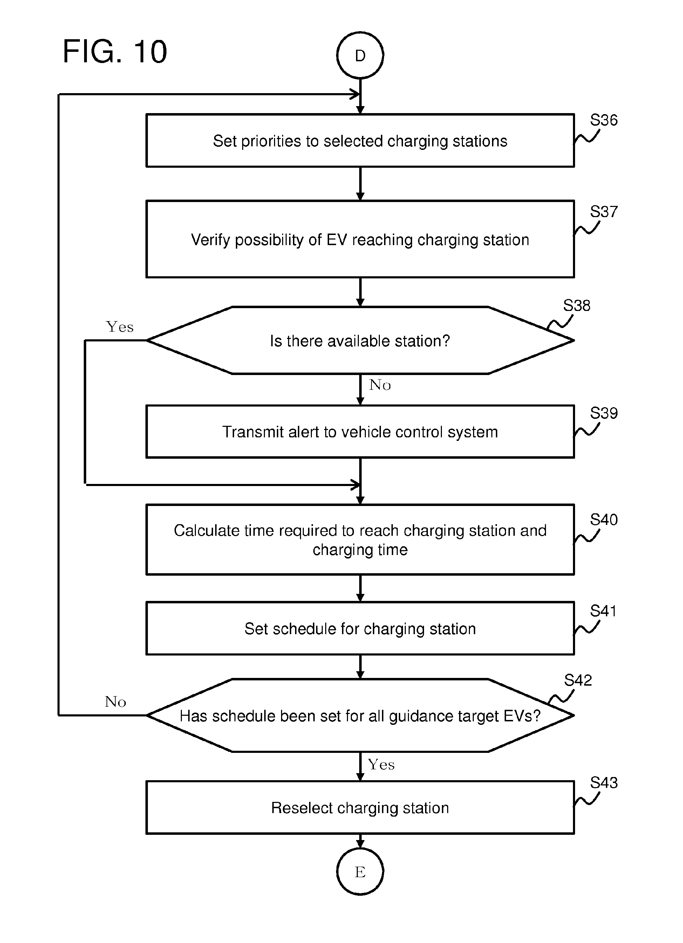

Fig. 10 is a flowchart illustrating processing that follows Fig. 9.
[Fig. 11]

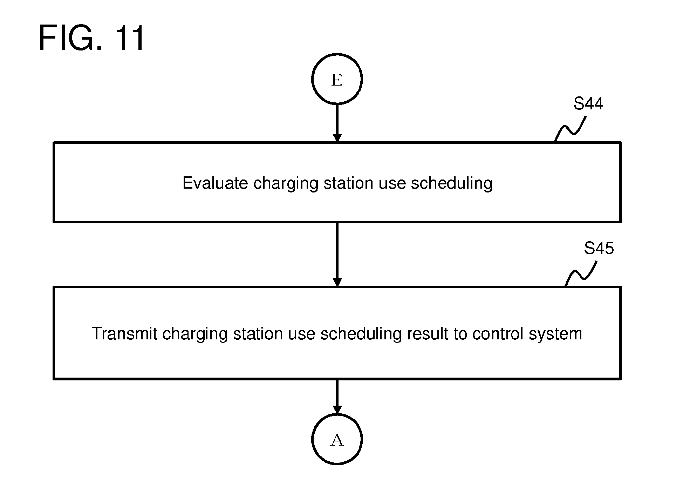

Fig. 11 is a flowchart illustrating processing that follows Fig. 10.
[Fig. 12]

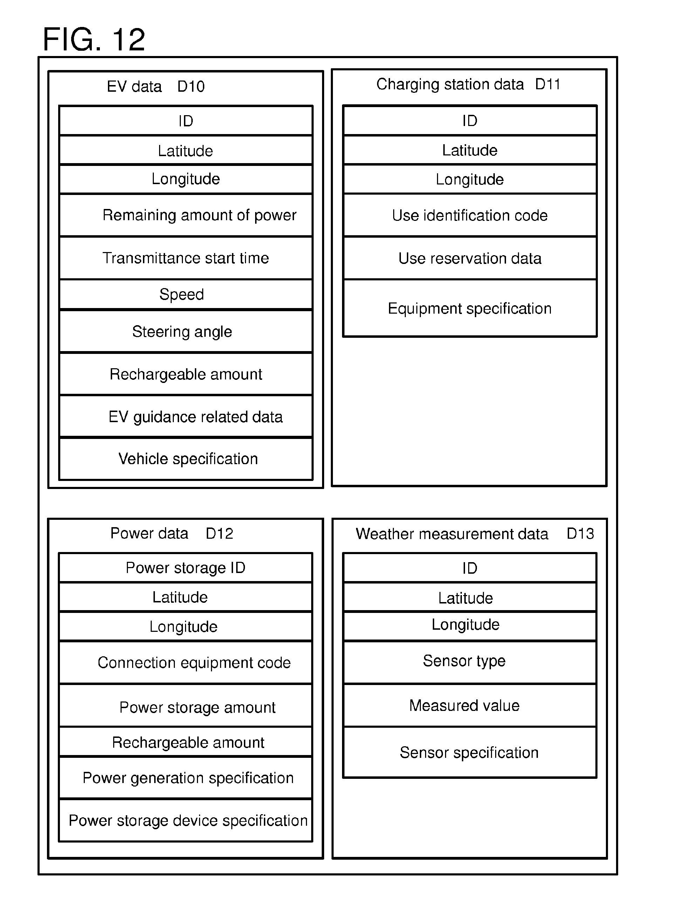

Fig. 12 is a view for illustrating a structure of received data.
[Fig. 13]

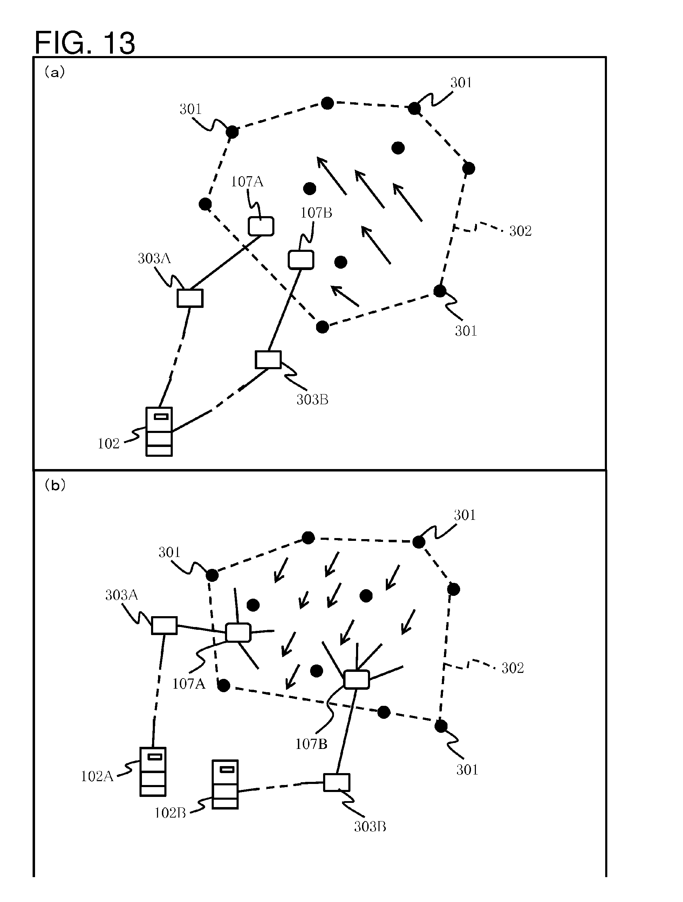

Fig. 13 is a view for illustrating the prediction of the amount of regional power (distributed power sources) and impacts on charging stations.
[Fig. 14]

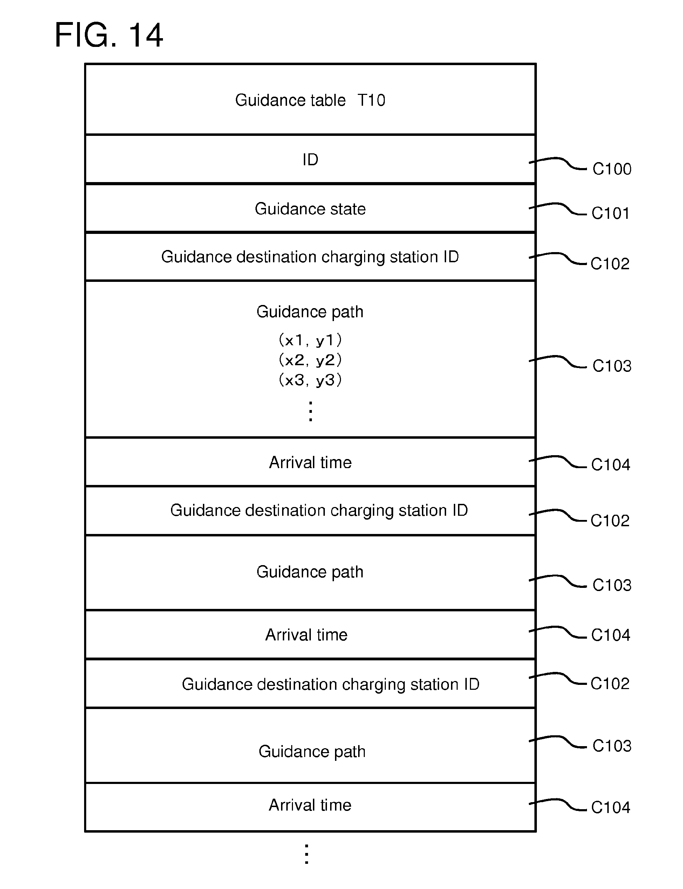

Fig. 14 is a view for illustrating a configuration of a guidance table.
[Fig. 15]

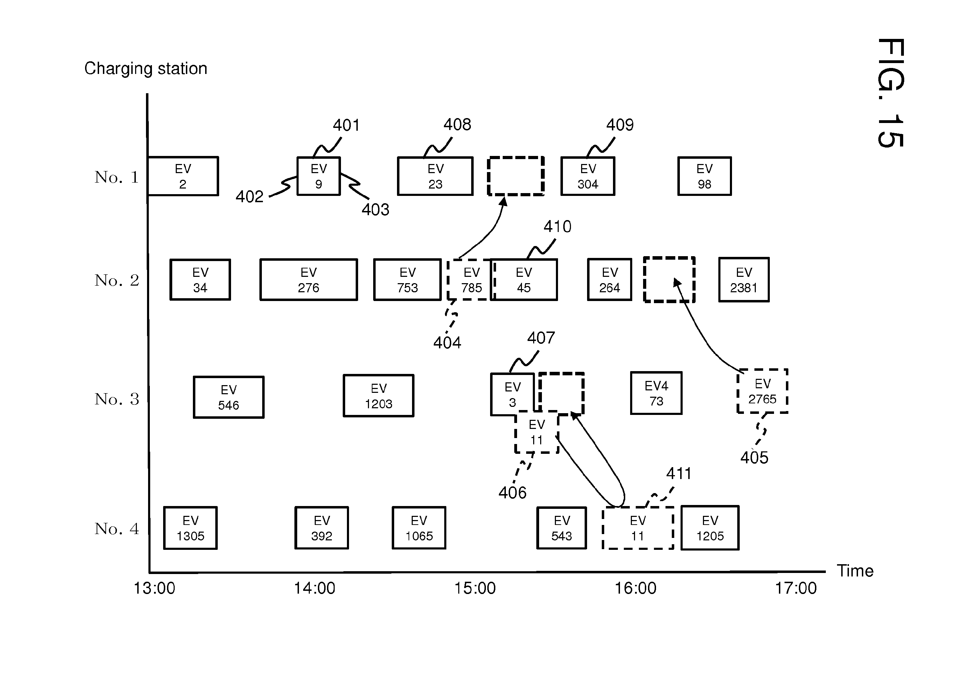

Fig. 15 is a view for illustrating a scheduling chart on the use of charging stations.
[Fig. 16]

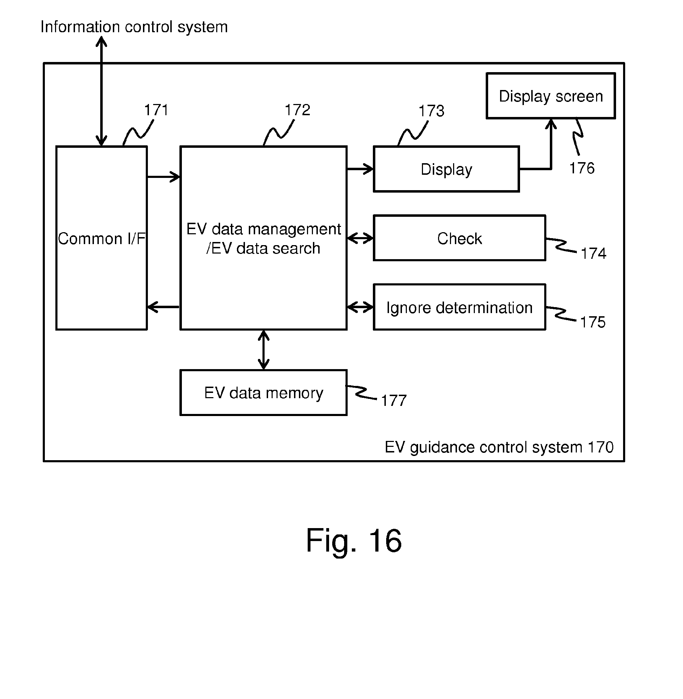

Fig. 16 is a view for illustrating a functional configuration of an EV guidance control system.
[Fig. 17]

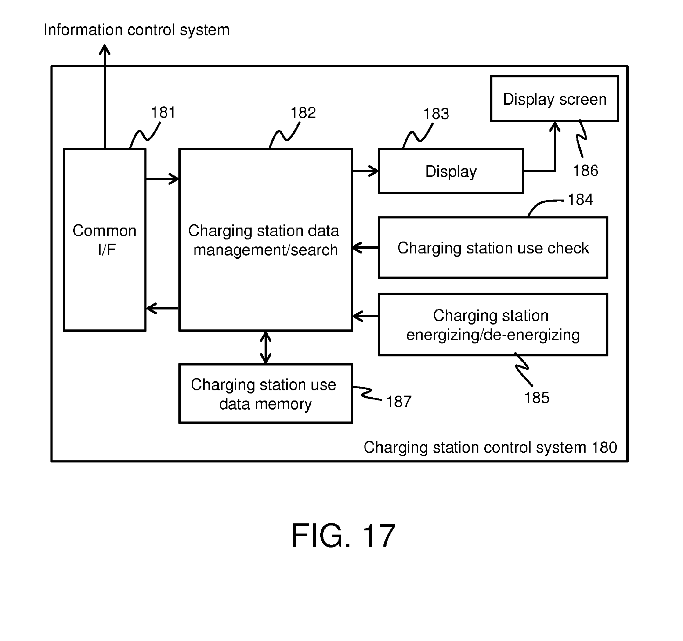

Fig. 17 is a view for illustrating a functional configuration of a charging station control system.
[Fig. 18]

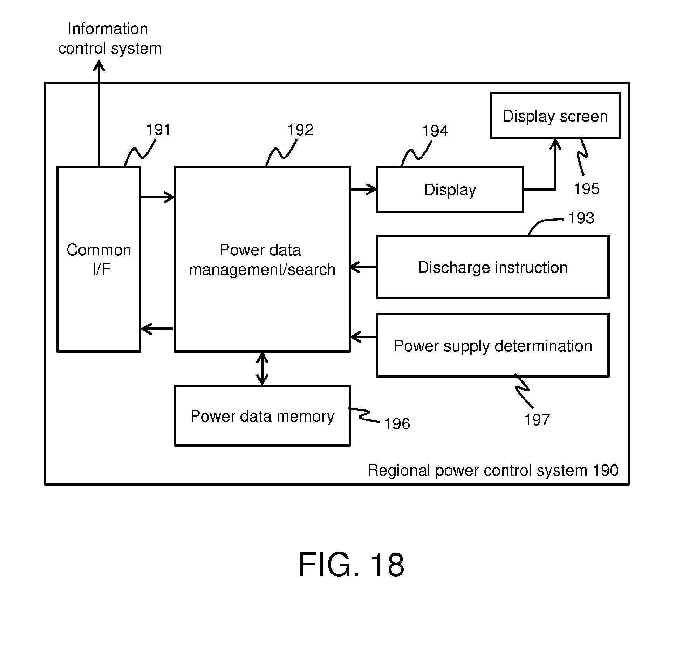

Fig. 18 is a view for illustrating a functional configuration of a regional power control system.
[Fig. 19]

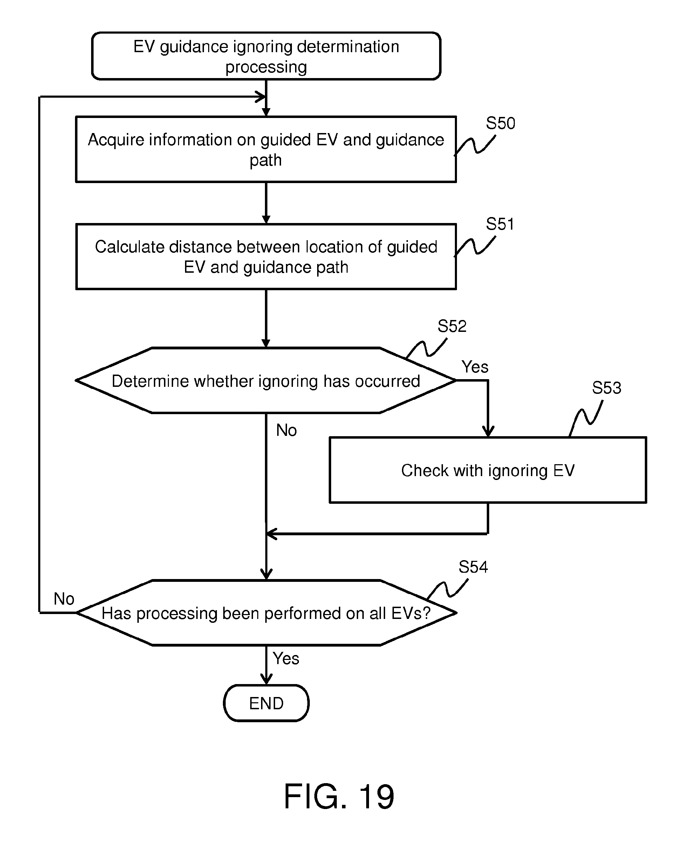

Fig. 19 is a flowchart for illustrating processing for determining whether an electric vehicle is running in accordance with guidance.
[Fig. 20]

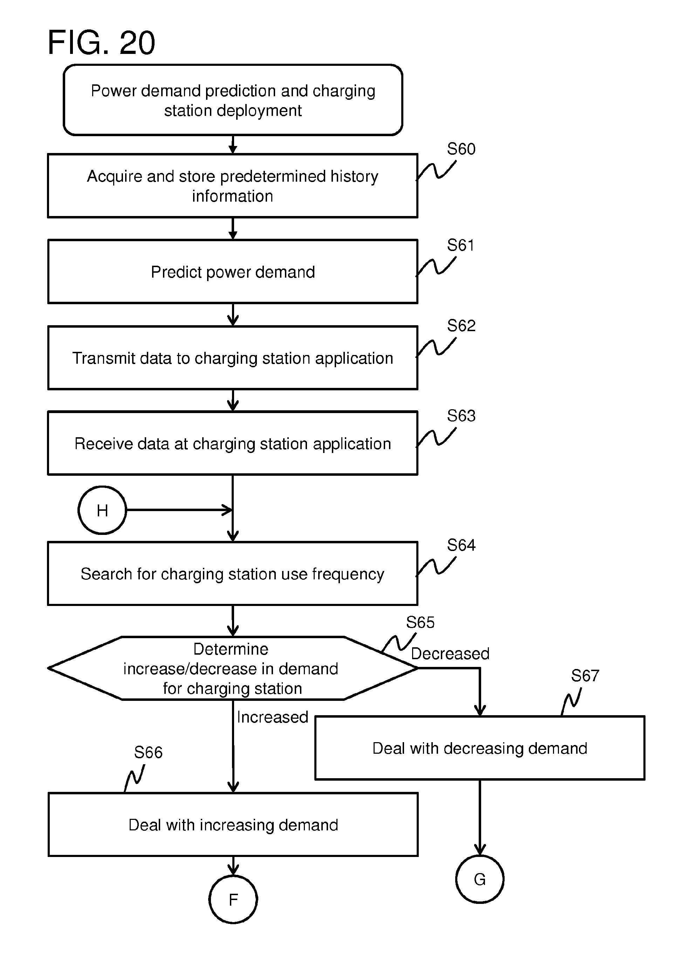

Fig. 20 is a flowchart for illustrating processing on the prediction of power demand and the deployment of charging stations.
[Fig. 21]

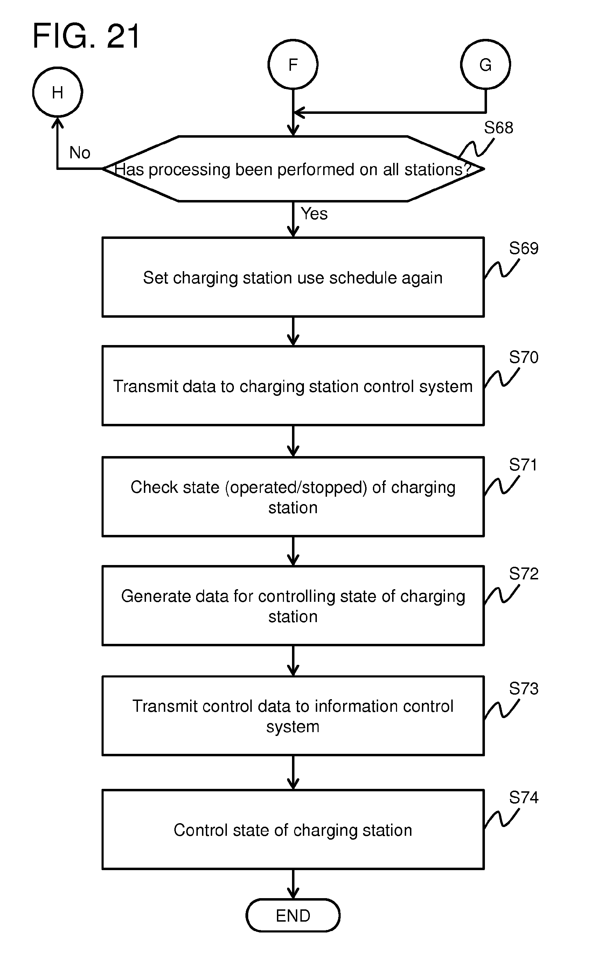

Fig. 21 is a flowchart illustrating processing that follows Fig. 20.
[Fig. 22]

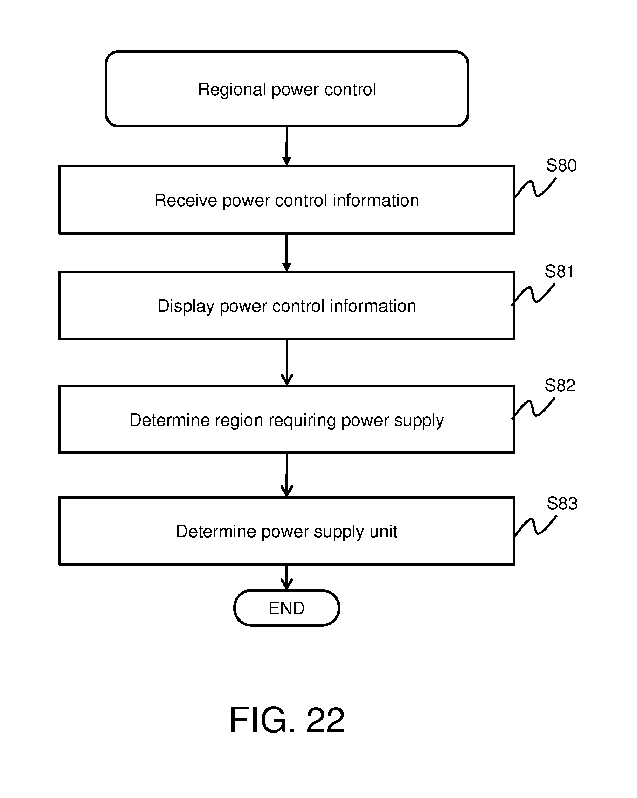

Fig. 22 is a flowchart for illustrating processing for controlling regional power.
[Fig. 23]

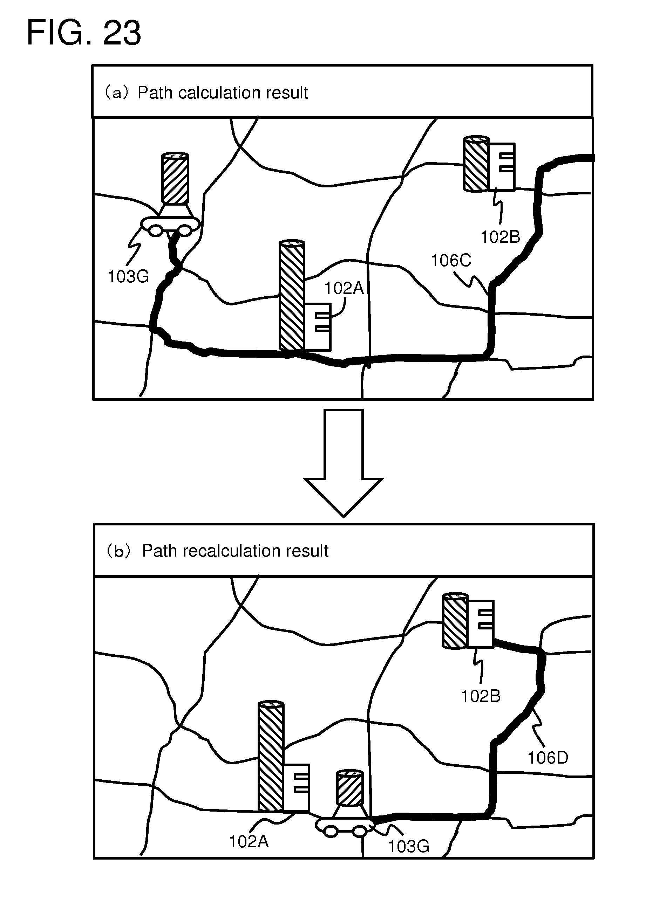

Fig. 23 is a view for illustrating a recalculation result of a guidance path to charging stations.
[Fig. 24]

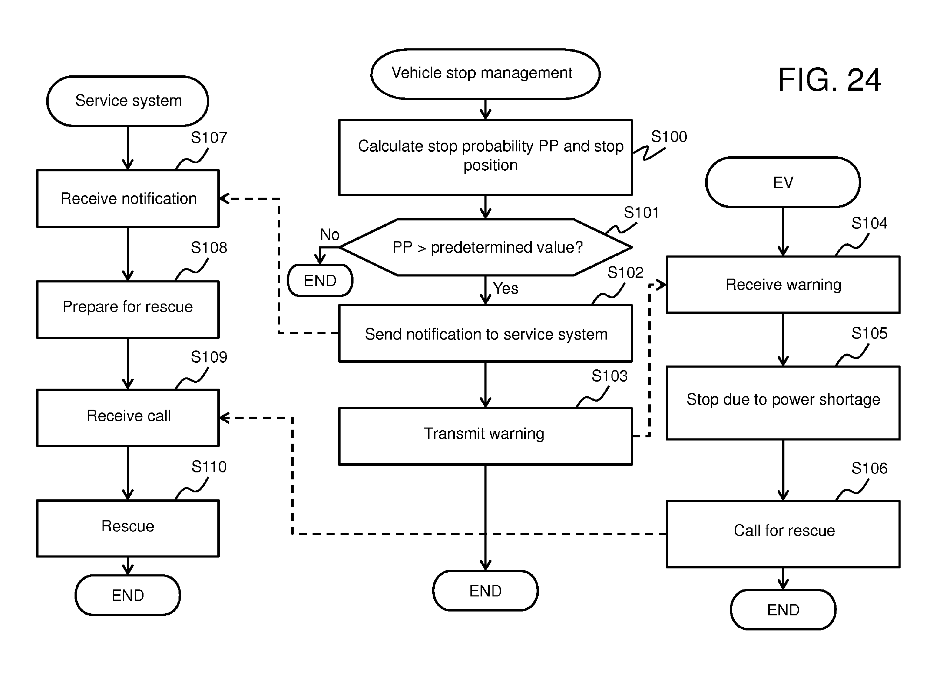

Fig. 24 is a flowchart illustrating processing, according to a second embodiment, for arranging charging service for an electric vehicle that is highly likely to stop due to exhaustion of a battery.

[Description of Embodiments]

The following describes embodiments of the present invention in accordance with the accompanying drawings. In these embodiments, as mentioned below in detail, (1) an EV that needs to be charged is recognized, (2) a location of an available charging station is recognized and the EV is guided to the charging station, and (3) the sum of a waiting time before the charging starts and the charging time is shortened as much as possible. Furthermore, in the present embodiment, (4) the number of charging stations is adjusted in accordance with a charging frequency, and (5) guiding to an appropriate charging station is performed in such a manner that batteries will not run out even when a large number of EVs are running.

To achieve (1) to (5) described above, a charging support system 1 of the present embodiment includes an adapter function 120 for collecting various information, an information control system 110 for performing control based on various information, various application systems 130 to 160, systems 170 to 172 for guiding EVs, a system 180 for controlling charging stations, and a system 190 for controlling regional power. In the charging support system 1, the systems 110 to 190 work together to guide an EV that might stop due to exhaustion of a battery to an appropriate charging station to thereby prevent the EV from stopping due to battery exhaustion.

(1) An EV that needs to be charged is recognized as follows. Specifically, each EV acquires positional information on the EV with a global positioning system (GPS). Each EV associates the positional information on the EV with information indicating the remaining amount of power of the EV and transmits the resultant information to a control center through wireless communications. Whether the EV needs to be charged can be determined in and/or outside of (in the control center) the EV. For example, whether the EV needs to be charged can be determined as follows. Specifically, the EV calculates a traveling time required to reach a destination from the current location, and compares a required amount of power obtained from the required traveling time and the current remaining amount of power.
(2) To guide the EV to the charging station, the control center collects information on charging stations available for the guidance target EV through a wired or wireless communication unit, and associates the positions of the charging stations with a map. The control center selects an appropriate one from the plurality of charging station as a guidance destination station, and guides the guidance target EV to the guidance destination station. The control center can monitor whether the guidance target EV is traveling to the guidance destination station. The control center can analyze positional information received from each of the plurality of EVs to recognize a state of traffic congestion. Thus, the control center can predict the required traveling time of the guidance target EV based on the state of traffic.
(3) The control center uses a unit for scheduling the use of the charging stations, to shorten the total time required for the charging (the sum of the charge waiting time and the time required for the charging). The control center detects a charging station with which the shortest total time required for the charging can be achieved, based on use and reservation states of the charging stations.
(4) The control center can adjust the number of charging stations deployed in each region, based on use histories of the charging stations. The control center can revise a deployment plan in such a manner that a large number of charging stations are deployed in an area involving a high use frequency, and idling charging stations can be de-energized in an area involving a low use frequency. The use frequency of the charging stations also depends on weather conditions and the like. Thus, the control center uses a unit for recognizing the use histories of the charging stations to analyze the use histories of the charging stations. The control center increases the number of available charging stations in a region involving a high use frequency by reenergizing the de-energized charging stations in the area, and closes the charging stations in the region involving a low use frequency. Thus, the entire charging stations can be used more efficiently. Upon determining that the amount of power in a charging station runs short, the control center causes distributed power sources (photovoltaic power generating systems, wind energy conversion systems, and power storage devices) in the area including the power station to discharge power to a grid. Thus, power is supplied to the charging station.
(5) The control center manages the use schedule of the charging stations to guide a large number of EVs to appropriate charging stations.

With the present embodiment having the configuration described above, traveling EVs are less likely to stop due to battery exhaustion, whereby the EVs can be stably operated. Furthermore, with the present embodiment, the total time required for the charging can be shortened, whereby users can enjoy greater convenience. Furthermore, in the present embodiment, the EVs can be guided to predetermined charging stations in such a manner that the use of the charging stations is dispersed, thereby preventing the concentrated use of a certain charging station while the other certain charging stations are used less frequently. In the present embodiment, when a charging station under battery exhaustion is detected, the power can be supplied from a distributed power source in the region. Furthermore, in the present embodiment, when an EV ignoring the guidance stops due to exhaustion of the battery, the EV can be quickly rescued.

[First embodiment]

A first embodiment is described below with reference to Fig. 1 to Fig. 23. Generally, the EV travels with power stored in a battery, while conventional vehicles travel by combusting fossil fuel. The EV therefore imposes smaller load on the environment than conventional vehicles.

While this may not be a case depending on the capacity of the battery, the EV can travel within a range smaller than that of the fossil fuel vehicle, and thus needs to be more frequently charged than the fossil fuel vehicle. Thus, a large number of charging stations for charging the EV are preferably deployed in each region. However, there is no guarantee that a large number of charging stations are deployed in each region. Furthermore, it takes more time to charge the EV than the fossil fuel vehicle. All things considered, a driver of the EV drives the vehicle while checking the remaining amount of power to determine when the charging is needed, and searches for the charging station that matches a predicted position of the EV at the timing when the charging is needed.

The traveling EV might stop due to exhaustion of the battery when the EV is in an immediate need for charging but the driver is not aware of the location of the charging station or when the charging station is too far to reach even when the driver knows the location of the charging station. The EV stopped at an unexpected position other than a parking lot and the like might cause traffic congestion.

The number of deployed charging stations is likely to increase with more widespread use of the EVs. Still, the charging of the EVs is concentrated to a small number of charging stations until the charging stations enough to cover the number of EVs are deployed. Thus, even when the EV, requiring the charging, manages to reach the charging station, there will be a waiting time before the charging starts, and furthermore, it takes time to charge the battery of the EV fully or to a certain level.

There will be an increased risk of the traveling EV stopping and more time will be required for full charging with more widespread use of the EVs. Thus, in the present embodiment, the traveling states of a large number of EVs are monitored to determine the risk of stopping due to battery exhaustion, the EVs are notified of information for reaching the available charging stations, and a warning is issued to the EVs when required.

In the present embodiment, the traveling position and the remaining amount of power of the EVs are managed. Thus, the EVs with a small remaining amount of power are guided to available charging stations. Thus, the EVs can be prevented from stopping in the course of traveling to be unable to travel.

A control method for controlling and guiding the EVs, and the control center that executes the control are described below. One feature of the control center for EVs according to the present embodiment may include guiding the EVs by using map information including a road network. In the present embodiment, a simulation for guiding an EV to a charging station is executed as follows. Specifically, the map data is associated with the position and the remaining amount of power of the EV requiring the guidance, the positions and the use states of the available charging stations, and the state of power supply in the region, and the like. Then, the resultant data is analyzed. The state of power supply in the region is a state of power supply to a region as a management target, and includes for example, states of the grid in the region and the distributed power sources in the region. The distributed power sources include, for example, a photovoltaic power generation system, a wind energy conversion system, a solar thermal power generation system, a geothermal generation system, and various power storage devices.

Fig. 1 illustrates an overview of the EV control center 1. The EV control center 1 includes, for example, the information control system 110 and the information adapter function 120. The information control system 110 is also coupled to a plurality of application systems (each abbreviated as application in the figure) 130 to 160 and various control systems 170A, 170B, 170C, 180, and 190 as subsystems.

The information adapter 120 is in charge of transmission and reception of information. The information control system 110 collects information, generates control information based on the collected information, and transmits the control information to a predetermined function.

The display application system 130 is an application system that displays on a display screen 100 the traveling state of each EV, the use states of the charging stations, and the like in a managed region, while being overlapped with the map data. The EV guidance application system 140 is an application system that guides an EV to a charging station. A charging station use application system 150 is an application system that manages the charging stations. The regional power control application system 160 is an application system that executes an analysis on the states of power supply, power supply/demand simulation, and the like in the managed region.

A general vehicle control system 170A is an EV guidance system for managing the traveling of general EVs such as general vehicles and displays EV guidance information, warnings, and the like. A commercial vehicle control system 170B is an EV guidance system for commercial EVs such as taxis and trucks. A public vehicle control system 170C is an EV guidance system for public vehicles such as police cars, ambulances, and fire engines. These EV guidance systems 170A to 170C may be collectively referred to as an EV guidance control system 170.

The charging station control system 180 is a subsystem for managing the power states and the like of the charging stations. The regional power control system 190 is a subsystem for managing the power supply/demand states in the region.

The display screen 100 is a full display screen for displaying information related to the managed region to monitor the traveling states of the EVs. For example, the managed region may be displayed in various units such as prefectures or municipalities, and in various scales.

The display screen 100 displays road map data describing a road network 101, symbolized charging stations 102A and 102B, symbolized various EVs 103A, 103B, 103C, 103D, 103E, and 103F, and a symbolized distributed power source 107.

For example, the distributed power source 107 is configured as in a photovoltaic power system and a wind energy conversion system, and includes a power storage device for storing generated power.

The information control system 110 can acquire the positional information and data on the amount of power from each EV and each charging station through the information adapter 120. Thus, the display application system 130 can display the information related to the EVs and the charging stations on the display screen 100 while being overlapped with the map.

The EVs are displayed while being distinguished from each other as the general vehicles 103A and 103B such as a passenger vehicle, the commercial vehicles 103D and 103E such as a truck or a taxi, and the public vehicle 103F such as a bus or a sharing vehicle. Remaining amounts of power 104A, 104B, 104C, 104D, 104E, and 104F of the EVs are each displayed next to the corresponding one of the symbol of the EVs 103A to 103F. The EVs 103A to 103F are collectively referred to as an EV 103 and the remaining amounts of power 104A to 104F are collectively referred to as a remaining amount of power 104 as appropriate.

The numbers of vehicles for which for which charging is reserved 105A and 105B are displayed next to the corresponding one of the charging stations 102A and 102B. The number of vehicles for which charging is reserved represents the number of EVs that have reserved the charging in the charging station. A reserved charging amount may be displayed instead of the number of vehicles for which charging is reserved. The reserved charging amount can be obtained by preparing a rechargeable amount per EV prepared in advance, and by multiplying the rechargeable amount by the number of vehicles for which charging is reserved. The sum of the reserved charging amounts of models of the EVs may be displayed by preparing a rechargeable amount for each EV model, and calculating the reserved charging amount of each EV model. The sum of actual rechargeable amounts of the EVs may be displayed by calculating the actual rechargeable amount from the remaining amount of power at the point when the charging starts for the EV that has made the reservation reaches the charging station (the rechargeable amount = the full charged amount of power - the remaining amount of power). As described above, the number of vehicles for which charging is reserved can be expressed as the sum of the reserved charged amounts or the available amount of power in the reserved charging station.

The display screen 100 further displays guidance paths 106A and 106B. One guidance path 106A represents a path for guiding the EVs 103A and 103B to the charging station 102A, while the other guidance path 106B represents a path for guiding the EV 103D to the charging station 102B. The guidance path depends on the traveling speed and time of the EV. More specifically, a path search is executed with the traveling time of the EV as a cost, and the path involving the smallest cost is selected as the guidance path.

As described above, the information control system 110 collects information from the EVs, the charging stations, power equipment (sensors and distributed power source devices in the grid), through the information adapter 120. The information control system 110 broadcasts required data in the collected information to the application systems 130 to 160. The information control system 110 transmits EV guidance data determined by the EV guidance application system 140 to the EV guidance control system 170. The information control system 110 transmits reservation information set by the charging station use application system 150 to the charging station control system 180. The information control system 110 transmits power control information set by the regional power control application system 160 to the regional power control system 190. Thus, the discharge of the distributed power sources disposed in the region is controlled.

For example, the information adapter 120 collects information on sensor data related to the position, the remaining amount of power, and the like of each EV, data on a state (an operation state or an non-operation state) of each charging station, specification data on the charging device, and information on the power storage amount of the distributed power sources such as the photovoltaic power system and the wind energy conversion system. The information adapter 120 transmits the collected information to the information control system 110.

The sensor data is data detected by a sensor, such as a global positioning system (GPS) or a battery monitor in the EV. The sensor data may also be referred to as sensing data.

The information adapter 120 transmits the various types of information, received from the information control system 110, to the predetermined control systems 170 to 190 through a control system network CN. The information received by the information adapter 120 from the information control system 110 includes for example, EV guidance data, reservation data on the charging station, data for energizing the de-energized charging station, and information for controlling the discharge of the distributed power sources.

As described above, the display application system 130 transmits the position and the remaining amount of power of the EV, the position of the charging station, the available amount of power (reserved charge amount), and the like to the display screen 100, so that the traveling state and the guidance state of the EV can be entirely displayed on the map.

The EV guidance application system 140 searches for the charging station available for each of the guidance target EVs, and searches for a guidance path from the current location of the EV to the charging station based on the road state information such as traffic congestion.

The charging station use application system 150 reserves the use of the charging station available for the EV that might stop due to battery exhaustion before reaching the destination. The scheduling is performed in such a manner that the reservation is distributed among a plurality of charging stations, to prevent a large number of EVs from being concentrated to a certain charging station.

The regional power control application system 160 determines whether the use frequency of the charging station has increased or decreased so that the power supplied to the region is effectively used. When a charging station with a high use frequency is found, the regional power control application system 160 may reenergize a de-energized charging station in the region, or propose a new charging station to be deployed in the region. When a charging station with a decreasing use frequency is found, the regional power control application system 160 may de-energize the charging station. The de-energizing of a charging station is an act of cutting off the power supply to the charging station, so that the charging station will become unavailable. The power consumption amount of the charging station to which the power supply has been cut off is extremely low or 0.

When distributed power sources (photovoltaic power system, wind energy conversion system, power storage devices, and the like) are in the region, the regional power control application system 160 instructs the distributed power sources to discharge power. Thus, the power can be supplied to the charging station to which the use is concentrated from the distributed power sources.

When there is an EV in a full charged state around a charging station with the power running short, the EV may discharge power to the grid to supply power to the charging station. Alternatively, the EV in the full charged state may be coupled to the charging station, so that the power can be supplied from the EV in the full charged state to the charging station.

As described above, the general vehicle control system 170A monitors the positions and the remaining amounts of power of the general EVs, and guides a general EV with a small remaining amount of power to a charging station. When the EV ignores the guidance, the general vehicle control system 170A cancels the use schedule of the charging station, and readjusts the schedule based on the current location of the EV. In this manner, the guidance to the charging station is repeatedly executed to the EV that might stop due to battery exhaustion, and the use schedule of the charging station is readjusted.

The commercial vehicle control system 170B monitors the positions and the remaining amounts of power of the commercial EVs such as taxis and trucks, guides an EV with a small remaining amount of power to a charging station, and readjusts the use schedule of the charging station when the EV ignores the guidance.

The public vehicle control system 170C monitors the positions and the remaining amounts of power of the public EVs such as busses and shared EVs, guides an EV with a small remaining amount of power to a charging station, and readjusts the use schedule of the charging station when the EV ignores the guidance.

The charging station control system 180 checks the availability states of the charging stations in the managed region. The availability states include the "operation state" in which a charging service can be provided to the EVs and a "non-operation state" in which the power supply to the charging station is cut off.

As described above, the regional power control system 190 monitors the power storage amount of the distributed power sources such as a photovoltaic power system or a wind energy conversion system. Thus, the regional power control system 190 determines discharge of power from the distributed power sources and monitors to see whether the discharge control is being executed.

The EV control center 1 uses the subsystems 130 to 190 to manage and control the charging stations, controls the regional power, and guides an EV that needs to be charged to an available charging station.

A schematic flow of information collection and control in the EV control center 1 is as follows. The information control system 110 collects from the information adapter 120 information related to the EVs, information related to power supply in the region, and information on the charging stations. The information control system 110 transmits at least part of the collected information to the display application system 130, the EV guidance application system 140, the charging station use application system 150, and the regional power control application system 160. Thus, predetermined application systems of the application systems 130 to 160 generate the information for predicting the movement of the EV based on the path information, information for reserving the use of the charging station, information for predicting the use of the charging station, information for determining the path for guiding the EV to the charging station, and information for controlling the state of the charging station in accordance with the amount of power supply.

The pieces of information thus generated are returned to the information control system 110 from the application systems. The information control system 110 transmits the information received from the application systems to the control systems 170 to 190 as appropriate. Only the required information is transmitted from the information control system 110 to a certain control system, and unrequired information is not transmitted to the control system.

The control systems 170 to 190 generate control data for guiding the EV, control data for checking the available charging stations, and control data for checking discharging from the distributed power sources. The pieces of control data are transmitted from the information control system 110 to the EV, the charging station, control devices in the distributed power sources through the information adapter 120, as appropriate. The control data includes: guidance data for guiding the EV to the charging station; control data for setting the state of the charging station to be the operation state or the non-operation state; and discharge control data for instructing the distributed power sources to discharge power.

Functional configurations of the information control system 110 and the information adapter 120 will be described with reference to Fig. 2. The configuration of the information adapter 120 will be described first. The information adapter 120 includes, for example, an EV information collection adapter 121, a charging station information collection adapter 122, a power information collection adapter 123, an environmental information collection adapter 124, an EV guidance adapter 125, a charging station control adapter 126, and a power control adapter 127. In the figures, "adapter" is omitted from the name of the components. Furthermore, terms such as "DB" and "unit" are omitted in the figure as appropriate.

The EV information collection adapter 121 is an adapter for collecting information on an EV. The EV information collection adapter 121 serves as a function of collecting information such as the current location, the remaining amount of power, the travel speed, the steering angle, the destination, the guidance state (whether the EV is following the guidance) of the EV.

The charging station information collection adapter 122 is an adapter for collecting information on charging stations. The charging station information collection adapter 122 serves as a function of collecting the positional information on available charging stations, as well as information on the charging time of the available charging stations, information on the number of available charging stations, and information on the device specifications.

The power information collection adapter 123 is an adapter for collecting power information. The power information collection adapter 123 serves as a function of collecting information on grid power, as well as power information such as the amount of power stored in the distributed power sources and information on the amount of power that can be supplied from EVs.

The environmental information collection adapter 124 is an adapter for collecting environmental information. The environmental information collection adapter 124 serves as a function of collecting weather information such as temperature, humidity, wind speed, wind direction, and the amount of sunlight.

The EV guidance adapter 125 is an adapter for guiding the EVs. The EV guidance adapter 125 serves as a function of instructing a guidance path for guiding an EV that needs to be charged to a charging station.

The charging station control adapter 126 is an adapter for controlling the use of each of the charging stations. The charging station control adapter 126 serves as a function of setting whether the charging station is available (reservation).

The power control adapter 127 is an adapter for controlling the distributed power sources in the region. The power control adapter 127 serves as a function of transmitting control information for controlling a facility (distributed power source) that can supply power to the grid in the region.

The functional configuration of the information control system 110 is described. The information control system 110 includes functions 201 to 220 that are described below. The information control system 110 mediates the collection and transmission of information.

An information control system adapter 201 is an adapter for receiving data from the predetermined adapters 121 to 124 and transmitting control data to the other predetermined adapters 125 to 127. The information control system adapter 201 executes security processing such as data authentication processing and data encrypting processing. The information control system adapter 201 executes data conversion processing for converting data received from an external device (the adapters 121 to 124) into data to be used in the information control system 110.

A sensor data management unit 202 serves as a function of managing data (the sensor data) measured or detected by each sensor. The sensor data management unit 202 stores and records sequentially transmitted information on the EVs, the charging stations, the regional power, or the weather in a stream history DB 214. The sensor data management unit 202 stores the sensor data also in a data management primary memory 204. The sensor data management unit 202 also samples the sensor data stored in the data management primary memory 204 based on a predetermined rule, and stores the sampled data in a data management secondary memory 205. More simply put, for example, the pieces of data collected from a large number of EVs are all stored in the stream history DB 214 and the data management primary memory 204. Data, in the pieces of data, satisfying a predetermined condition is extracted to be stored in the data management secondary memory 205. The data stored in the data management secondary memory 205 is the target of search performed by a data search unit 206. Thus, a large number of EVs can be guided to the charging stations with the states of a large number of EVs monitored at real time.

A guidance control data management unit 203 serves as a function of creating and managing data for the guiding and the controlling. The guidance control data management unit 203 generates and manages data for guiding the EVs, data for reserving the use of the charging stations, data for energizing or de-energize the charging stations, and data for causing the distributed power sources in the region to discharge power.

The data management primary memory 204 is a memory used for data management. The data management primary memory 204 is a storage space for storing data as a result of attaching tag information describing an identification code and an acquired time to the data collected from the EVs, the charging stations, the distributed power sources, an external weather system, and the like. The data stored in the data management primary memory 204 is not classified. The data is stored in the stream history DB 214 before being stored in the data management primary memory 204, simply illustrated as "primary memory" in the figure.

The data management secondary memory 205 is another storage space used for data management. The data management secondary memory 205 stores the data, stored in the data management primary memory 204, while being classified based on the identification code. Sequentially acquired stream data is sampled in such a manner that the data that can be estimated from the relationship with the previous or subsequent data will be deleted. The data stored in the management secondary memory 205 is classified (structured) based on the identification code. Thus, the data processing such as searching can be executed with a high efficiency.

The data search unit 206 serves as a function of searching for data. The data search unit 206 searches for the data stored in the data management secondary memory 205 in accordance with a predetermined search condition.

A data analysis unit 207 serves as a function of analyzing a large amount of collected data. The data analysis unit 207 includes a data trend analysis unit 208, a data distribution analysis unit 209, a data filtering unit 210, and an environmental analysis unit 211.

The data trend analysis unit 208 serves as a function of analyzing data trend. The data trend analysis unit 208 analyzes the use frequency of the charging station, predicts the use of the charging station in the future from the past use history, and predicts the power consumption by using the weather information and the power use history.

The data distribution analysis unit 209 serves as a function of analyzing data distribution. The data distribution analysis unit 209 detects a traffic congestion portion by analyzing the frequency of concentration of the travel speed, based on the result of analyzing the EV travel time (travel time). Furthermore, the data distribution analysis unit 209 predicts the movement of the traffic congestion position, by referring to the state in the past based on the season, time, location, and the like.

The data filtering unit 210 serves as a function of filtering data. The data filtering unit 210 serves as a function of selecting data within a predetermined threshold range from the data stored in the data management secondary memory 205. Thus, an EV with the remaining amount of power equal to or smaller than a predetermined value is selected from all the EVs.

The environmental analysis unit 211 serves as a function of analyzing the environment. The environmental analysis unit 211 predicts the change in the power generation amounts of the distributed power sources over time from the weather information. The weather data (environmental data), including the wind speed, the wind direction, and the amount of sunlight, is acquired while being associated with the sensor position. Thus, the environmental analysis unit 211 performs spatial interpolation based on the positional information on the sensors, to obtain planer information as a result of the conversion. Thus, the power generation amounts of the photovoltaic power system and the wind energy conversion system that vary among the installed locations can be accurately predicted with a small number of sensors.

A geographical information processing unit 212 serves as a function of processing geographical information. The geographical information processing unit 212 is simply illustrated as GIS in the figure. The geographical information processing unit 212 manages the road map data formed of coordinate strings and the locations of the charging stations. The geographical information processing unit 212 manages the map data, the positional information, and the related attribute data while being associated with each other, and thus can perform searching for the related attribute information and the spatial analysis based on the position for each region. For example, the geographical information processing unit 212 can search for the shortest path by using a network shape represents a road and cost information associated with data on a road segment as a part of the network.

A common interface (I/F in the figure) 213 is a common interface used by the information control system 110 to exchange data with the application systems 130 to 160 and the control systems 170 to 190. The common interface 213 has a function of transmitting data to the application systems and the control systems, a function of receiving data from the application systems and the control systems, a security processing function such as data authentication, and a data conversion function.

For example, the data can be transmitted and received with a generally used communication scheme such as Hyper Text Transfer Protocol (HTTP) and Simple Mail Transfer Protocol (SMTP). The data is transmitted and received in a common format defined by Extensive Markup Language (XML) or the like.

A stream history database 214 is a database that stores time-series data received from the adapters 121 to 124. In the figure, the database is simply illustrated as DB. Examples of the time-series data include, as will be described in greater detail with reference to Fig. 12, data D10 on an EV, data D11 on a charging station, data D12 on power, and data D13 on weather.

A control history DB 215 is a database for managing a transmission history of the control data. A map DB 216 is a database for storing the road map data. The map DB 216 manages the road network shape and the positional information on the charging stations.

A facility/attribute DB 217, simply illustrated as "facility 217" in the figure, is a database for managing an attribute of a facility, and manages a specification attribute of the charging station and attribute data on a road segment, for example. The specification attribute of the charging station includes a supplied amount of power, a maintenance period, and the like for example. The attribute data on the road segment includes, for example, data indicating a traffic congestion section, data for identifying a one way road, data for identifying a place where the road is closed, and the like. The facility attribute data is stored while being associated with the map shape and the positional coordinates. The map shape can be defined with any one of the number unique to the map and coordinate data forming the shape data on the map.

A charging station use history DB 218 is a database for storing the use history of the charging stations. A power use history DB 219 is a database for storing a history related to the power supply to the managed region. A weather history DB 220 is a database for storing weather changes in the managed region.

The functional configuration of the EV guidance application system 140 will be described with reference to Fig. 3. The EV guidance application system 140 includes functions 141 to 147 that are described below, and is an application system for guiding EVs to charging stations. The EV guidance application system 140 uses the positional data on a large number of EVs, which are changing with time, to detect an EV that might stop with the remaining amount of power used up before reaching the destination, and guides the detected EV to a charging station.

A common interface 141 serves as a function of exchanging data between the information control system 110 and the EV guidance application system 140. The common interface 141 may have a function of transmitting data to the information control system 110, a function of receiving data from the information control system 110, a security processing function such as data authentication, and a data conversion function.

An EV data management unit 142 acquires the positional information on the EVs and the road map data from the information control system 110, and determines the guidance path for each of the EVs by executing an analysis for checking on which road the EV is traveling, the charging station reserved for the EV, and the like. The EV data management unit 142 evaluates whether the guidance method is optimum.

An EV data search unit 143 serves as a function of searching data related to a specific EV in an EV data memory 148. An EV selection unit 144 serves as a function of selecting the EV that might cause battery exhaustion before reading the destination in the EV data transmitted from the information control system 110.

An EV travel time calculation unit 145 serves as a function of calculating the total travel time required for the EV to reach the destination by using the travel path of the EV and the cost (a time required for passing) of each road segment acquired from the information control system 110.

An EV travel prediction unit 146 serves as a function of calculating the travel speed of the EV based on the EV data acquired at a predetermined sampling cycle, and predicting a future position of the EV based on the travel speed and the road map data. An EV guidance confirmation unit 147 serves as a function of evaluating whether the EV is traveling under the guidance.

The EV data memory 148 is a storage space for storing the current location, the remaining amount of power, the steering angle, the travel speed, the destination, and the travel time for each road segment of the guidance target EV, while being associated with each other.

A functional configuration of the charging station use application system 150 will be described with reference to Fig. 4. The charging station use application system 150 determines available charging stations by controlling availability of charging stations in accordance with a used time, power conditions, states of the facility (functionally normal or abnormal), for example. The charging station use application system 150 includes functions 151 to 157 that are described below.

A common interface 151 is an interface unit for transmitting and receiving data to and from the information control system 110. The common interface 151 may have a function of receiving use information on charging stations transmitted from the information control system 110, a function of transmitting information on available charging stations to the EV guidance application system 140, a function of transmitting the use schedule on the charging stations to the charging station control system 180, a security processing function, and a data conversion function.

A charging station data management function 152 serves as a function of managing data related to the charging stations. The charging station data management function 152 stores data indicating the specifications and the use states of the charging stations in a charging station use data memory 158.

A charging station data search function 153 serves as a function of searching for the data related to the charging stations. The charging station data search function 153 can search for charging specifications and scheduling data on the available charging stations, for example.

A charging station data selection unit 154 serves as a function of selecting the data related to the charging stations. The charging station data selection unit 154 searches use scheduling day of the charging stations for the use schedule of each charging station.

A charging station use change unit 155 serves as a function of changing the use reservation of the charging stations. The charging station use change unit 155 calculates the time required for the user (mostly the driver of the EV) before start using a charging station and the time required for completing the charging. The charging station use schedule change unit 155 changes the use scheduling by inputting a use time range of the EV to the charging station use schedule, based on the time required before start using and for completing the charging. The charging station use change unit 155 determines available charging stations to be registered in the charging station use schedule in accordance with the power demand.

A charging station use evaluation unit 156 serves as a function of evaluating the use of the charging stations. The charging station use evaluation unit 156 selects the optimum value by comparing a plurality of results of cases where the EV is guided. The charging station use evaluation unit 156 determines whether to increase or decrease the number of charging stations in the region in accordance with the power demand in the region.

A preference DB 157 is a database for storing preference of each EV user on how to use time. The charging station use data memory 158 is a memory space for storing data related to the use of the charging stations.

A functional configuration of the regional power control application system 160 will be described with reference to Fig. 5. The regional power control application system 160 analyzes the power supply/demand states in the region, and controls the power supply from the distributed power sources to the charging stations, the power supply from the EVs to the charging stations, and energizing of the charging stations, and includes functions 161 to 169 that are described below.

A common interface 161 is an interface unit for exchanging data with the information control system 110 and the other application systems 130,140,150. The common interface 161 may have a data transmission function of discharging stored power to the grid, a data receiving function of receiving power generation information from the distributed power sources, a security processing function, and a data conversion function.

A power data management unit 162 serves as a function of managing information related to power in the region. The power data management unit 162 manages information related to power supplied to the managed region from the grid and information related to power supplied to the region from the distributed power sources. Information related to power demand may be managed in addition to the information related to power supply.

A power data search unit 163 serves as a function of searching for information satisfying a search condition in information, related to power, stored in the power data memory 168. The power data search unit 163 performs search in accordance with the location, because the state of power supply (power supply/demand state) to the region differs among locations.

A power supply calculation unit 164 performs a calculation to determine whether the amount of power consumed by each of the charging stations and the amount of power supplied to the charging station is balanced. In other words, the power supply calculation unit 164 refers to the power consumption of the charging station and the past use history of the charging station to predict whether the power consumption of the charging station exceeds the amount of power supplied from the grid. Upon predicting that the power consumption of the charging station exceeds the amount of power supplied from the grid, the power supply calculation unit 164 causes the distributed power sources in the region to discharge power (regional power). Thus, the power supply and the power demand in the region are balanced. Thus, the power supply calculation unit 164 generates control data (control data for controlling the distributed power sources) for controlling the regional power.

A weather data management unit 165 serves as a function of acquiring weather data from an external weather server or the like, and storing a weather data in a weather data memory 169. A weather data search unit 166 serves as a function of searching for weather data satisfying a predetermined search condition in the weather data stored in the weather data memory 169. The weather data management unit 165 performs search in accordance with the location, because weather data such as the amount of sunlight, a wind speed, and a wind power differs among locations. A weather analysis unit 167 serves as a function of calculating the weather data in each point in the entire managed region based on the weather data acquired in a predetermined location.

A power data memory 168 is a memory space for storing information indicating changes in the power use states in the charging stations. The weather data memory 169 is a memory space for storing data related to weather data (temperature, humidity, the amount of sunlight, wind speed, wind power, and the like).

A functional configuration of the display application system 130 is described with reference to Fig. 6. The display application system 130 serves as a function of displaying, as graphics, the positions and the remaining amounts of power of the EVs, the use states of the charging stations, the difference between the amount of power supplied to the region and the amount of power used in the charging station, and the like on the road map. The display application system 130 includes functions 131,132,100 that are described below.

A common interface 131 is an interface unit for communicating with the application systems 140,150,160 and the information control system 110. The common interface 131 may have, for example, a data transmission function of receiving road map data, charging station use data, power data, and the like transmitted from the EV guidance application system 140, the charging station use application system 150, and the regional power control application system 160 through the information control system 110, and a security processing function.

A display data generation unit 132 serves as a function of converting each piece of received data into display data. A display screen 100 is a screen for displaying the display data from the display data generation unit 132 while being overlapped on the map, to display the guidance states of the EVs, the use states of the charging stations, and the state of the regional power.

Processing of simultaneously guiding a large number of EVs running in a managed region is described with reference to the flowcharts in Fig. 7 to Fig. 11. While the unit of function that actually executes processing is described as a subject of operation, the subject of operation may be in unit of system instead. For example, the processing executed by the sensor data management unit 202 in the information control system 110 may be referred to as the processing executed by the information control system 110.

The information control system 110 collects the information related to the EVs, the information related to the charging stations, the information related to the regional power, and the information related to the environment by using the adapters 121 to 124 described above.

The information related to the EVs can be collected at relatively short intervals of time (for example, at intervals of few seconds) . Naturally, an extremely large memory space is required to receive the pieces of information from all of a large number of EVs and store the information in a memory. Thus, the sensor data management function 202 samples the pieces of information acquired from the EVs based on a certain rule, so that the largest possible amount of information can be stored in the primary memory 204.

The adapters 121 to 124 collect EV data D10 as information related to the EVs, charging station data D11 as information related to the charging stations, power data D12 as information related to power, and weather measurement data D13 as information related to the weather, on a regular or irregular basis (S10).

Structure examples of the data D10 to D13 will be described with reference to Fig. 12. The EV data D10 may include, for example, an EV identification code, positional coordinates, the remaining amount of power, transmittance start time, speed, steering angle, the rechargeable amount, EV guidance related data, and vehicle specifications.

The EV identification code (simply referred to as ID in the figure) is information for uniquely identifying an EV. For example, information such as a license plate of a vehicle may be used as the EV identification code.

The positional coordinates are information for identifying the position of the EV and is information on the latitude and the longitude, for example. The positional coordinates can be acquired by using the GPS, Inertial Navigation System (INS), and the like. The latitude and the longitude can be acquired as global coordinates such as the standard WGS-84 used in the GPS. The information control system 110 performs coordinate conversion with the information control system adapter 201, when local coordinates or Universal Traversal Mercator (UTM) is used for the coordinate system of the map.

The remaining amount of power is the power storage amount of the battery installed in the EV at the time of transmitting the EV data. The transmittance start time is a time when the EV data is transmitted. The speed is the travel speed of the EV. The speed data can be detected by a speed sensor installed in the EV. Not only the speed but also the acceleration may be acquired from the EV. The steering angle is information indicating the steering angle of the EV. The steering angle can be detected by a steering angle sensor installed in the EV.

The rechargeable amount is the chargeable capacity of the battery installed in the EV. In other words, the rechargeable amount is the amount of power required to fully charge the battery at the point when the EV data is transmitted. The rated capacity gradually reduces due to the degradation of the battery over time. Thus, the information control system 110 constantly acquires the rechargeable amount from the EV. The amount of power to be charged in the battery of the EV can be calculated as the difference between the remaining amount of power and the rechargeable amount. It is to be noted that the battery needs not to be constantly fully charged. The charged level may be lower than 100%, and may be 80% or 50% for example, considering the balance between the required amount of power and the time required for the charging. When the EV is near the destination where the EV can be charged, the EV preferably starts running with the battery charged up to about 60% rather than 100% for the sake of time efficiency.

The EV guidance related data is data related to the guidance for the EV. The EV guidance related data includes information for the EV to request the control center 1 to resume the guiding, when the user ignores the guidance path proposed by the control center 1. The EV guidance related data further includes information indicating the type of the EV (general vehicle, influential vehicle, or public vehicle) and the like.

The vehicle specifications are information indicating the specifications of the EV. The vehicle specifications include information indicating the vehicle model such as a station wagon, a minivan, a sports car, or a sedan, for example. The vehicle specifications may further include the model of the driving motor and the like.

A structure example of the charging station data D11 is described below. The charging station data D11 can include, for example, a charging station identification code, positional coordinates, a use identification code, use reservation data, and charging station equipment specifications.

The charging station identification code (simply illustrated as ID in the figure) is information for uniquely identifying each charging station in the managed region. For example, a serial number may be used as the identification code of the charging station. The positional coordinates of the charging station are information indicating the location of the charging station, and are expressed with the latitude and the longitude, for example.

The use identification code is information indicating the use state of the charging station. The use state includes the operation state, the non-operation state, an unavailable state, and the like. The operation state indicates that the charging state is capable of charging EVs. The operation state may be subdivided into "in use" and "waiting" to be managed. The "in use" is a state where an EV is actually being charged. The "waiting" is a state where the charging station can charge an EV but is not currently charging any EV. The "non-operation state" is a state where the power supply to the charging station is cut off. The charging station in the non-operation state cannot charge EVs. The charging station in the non-operation state can charge EVs only after the state is changed to the "operation state". The "unavailable state" is a state where the charging station cannot charge EVs. The charging station is managed as the "unavailable state" when the power supply to the charging station is not enough for the number of EVs using the charging station, when the charging station is under inspection work, and when some sort of failure has occurred in the charging station.

The use reservation data is information related to the use reservation of the charging station. The use reservation data includes the identification code of the EV that has reserved the use of the charging station, the use start time, and the use stop time.

The charging station equipment specifications are information related to the charging station equipment specifications. For example, the charging station equipment specifications include the model, performance, manufacturer, scheduled maintenance period, and the like of the charging station.

A structure example of the power data D12 is described below. The power data D12 can include, for example, a power storage identification code, positional coordinates, a connection equipment code, a power storage amount, the rechargeable amount, power generation specifications, and power storage specifications.

The power storage identification code (illustrated as power storage ID in the figure) is information for uniquely identifying the power storage device disposed in the managed region. For example, a serial number and the like may be used as the power storage identification code.

The positional coordinates are information for identifying the position of the power storage device, and are expressed with the latitude and the longitude, for example. The connection equipment code is a code for identifying connection equipment used for discharging power stored in the power storage device to the grid. The power storage device discharges power to the grid through predetermined connection equipment.

The power storage amount indicates the maximum amount of power that can be stored in the power storage device. The maximum amount of power actually gradually decreases with the degradation of the power storage device due to the use. Thus, the control center 1 constantly acquires the maximum amount of power of the power storage device.

The rechargeable amount indicates the chargeable capacity of the power storage device. The chargeable amount of power changes over time due to the degradation of the power storage device over time.

The power generation specifications indicate the type of power generation equipment that supplies power to the power storage device. The type of power generation equipment includes, for example, the photovoltaic power system, the wind energy conversion system, the EVs, and the like. The power output from the photovoltaic power system, the wind energy conversion system, the EVs, and the like is at least partially input to the power storage device to be stored.

The power storage specifications are information indicating the type and the like of the power storage device. As the type of the power storage device, for example, a lithium ion secondary battery, a nickel-hydrogen battery, a sodium-sulfur battery, and the like have been known.

A structure example of the weather measurement data D13 is described below. The weather measurement data D13 includes, for example, a measurement sensor identification code, positional coordinates, a sensor type, measurements, and sensor specifications.

The measurement sensor identification code is information for uniquely identifying a sensor that measures a weather condition. The weather condition as the measurement target includes, for example, temperature, humidity, the amount of sunlight, wind speed, wind direction, and the like. The weather conditions may be measured with different sensors, or a single sensor may be used to measure a plurality of different weather conditions (for example, the amount of sunlight and the wind speed). Each measurement sensor can be identified by the measurement sensor identification code, whereby the control center 1 can manage the accuracy of each measurement sensor.

The positional coordinates are information indicating the installed position of each of the measurement sensors, and are expressed with the latitude and the longitude, for example. The sensor type is information indicating the type of the measurement sensor. The sensor type includes, for example, a temperature sensor, a humidity sensor, an amount-of-sunlight sensor, a wind speed sensor, and the like. The measured value indicates a value measured by the measurement sensor. The sensor specifications indicate the equipment specifications of the measurement sensor.

Referring back to Fig. 7, the pieces of sensor data D10 to D13 acquired by the adapters 121 to 124 are transmitted to the information control system adapter 201 in the information control system 110 (S11). The pieces of sensor data are aggregated in the information control system 110. Thus, the information control system 110 selects and accumulates data, analyzes data, and transmits data to the application systems 130 to 160.

The data transmitted from the adapters 121 to 124 and received by the information control system adapter 201 is encoded to achieve higher security. Thus, the information control system adapter 201 decodes the encoded data with a security processing function.

The adapters 121 to 124 continuously acquire data for a predetermined period of time (data acquisition period) (S12). If the data acquisition period has elapsed (S12: NO), the processing proceeds to Step S13. If the data acquisition period has not elapsed (S12: YES), the processing returns to Step S10 where the data is received.

The information control system 110 stores the data acquired from the adapters 121 to 124 in Step S11 in the data management primary memory 204 through the sensor data management unit 202 (S13).

The sensor data management unit 202 stores the sensor data stored in the data management primary memory 204 also in the stream history DB 214 (S14).

The information control system 110 samples the data based on a predetermined rule (S15). Sampling of the EV data D10 can be carried out in the following manner, for example.

The positional coordinates of the EV vary with time. Thus, the EV data is collected in a unit of seconds. Thus, the data acquisition period (sampling pitch) is set to be long, whereby the EV data to be stored can be sampled. There is no problem in setting the sampling pitch to be long because the value at a certain point can be estimated from the previous and the subsequent values.

When the EV data D10 is failed to be acquired while the EV is traveling on a road in a constant direction, the position can be estimated by calculating the travel speed from the travel history with a small estimation error of the position assuming that the EV is less likely to travel out of the road.

When the speed of the EV has sharply changed from the speed at the point when the previous EV data D10 has been acquired (accelerated or decelerated), or when the amount of change of the travel direction of the EV from the steering angle is equal to or larger than a predetermined value, the EV data D10 is acquired.

The charging station data D11 is sampled as follows. The data D11 at the point when the charging station is started to be used by the EV is acquired. The data D11 at the point when the charging station transitions from the operation state to the non-operation state is acquired. The data D11 is acquired at a predetermined timing set in advance. The predetermined timing includes, for example, a charging start time, a charging stop time, a discharge start time from the distributed power source, a discharge stop time, and the like.

The environmental data (the weather measurement data D13) can be sampled as follows for example. The weather measurement data D13 changes with time, as in the case of the EV data D10, and thus is acquired in a unit of seconds. Alternatively, the weather measurement data D13 may be acquired when the situation sharply changes. For example, the weather measurement data D13 is acquired when the wind speed, the wind direction, the amount of sunlight, or the like sharply changes within a predetermined short period of time.

The sensor data management unit 202 stores the data thus sampled in the data management secondary memory 205. The data management secondary memory 205 stores the sensor data that is classified in accordance with the identification code of the data.

The sensor data management unit 202 stores the sensor data stored in the data management secondary memory 205 in the stream history DB 214 (S16).

The data analysis unit 207 acquires weather data history stored in the weather history DB 220 through the data search unit 206 and the like (S17). The data trend analysis unit 208 in the data analysis unit 207 analyzes the change in the use frequency of the charging station and the regional power consumption based on the weather data history. Furthermore, the data trend analysis unit 208 predicts the use and the required amount of power of the charging station in the future, from the past use history and the past power use history.

The charging station use history and the power use history are stored in the charging station use history DB 218 and the power history DB 219. Thus, the data trend analysis unit 208 uses the pieces of data to predict the future use frequency and the future power consumption (total charge amount to the EVs).

The period of the history to be used needs to be determined for the prediction. How the use frequency and the power consumption of the charging station transition vary in accordance with the weather condition (sunny, rainy, hot, humid, dry, and the like). Thus, the data search unit 206 searches for the weather data indicating the weather condition similar to the current weather condition, in the same time of the year within a predetermined range from the present such as the same time of the year last year, the same time of the year two years ago, and the like (S17). The data search unit 206 extracts the weather data history that matches the current weather condition (the temperature, humidity, sunny, rainy, and the like) within a predetermined error range, in the weather data history of the same time of the year.

Furthermore, the transition over time within a predetermined time range from the point where the weather conditions match within the predetermined error range is searched. Thus, a clue for predicting the changes in the future can be obtained. Whether it is summer or winter can be determined from the temperature. Whether it is a sunny day, a rainy day, a humid day, or a dry day can be determined from the humidity. The search result is stored in the data management secondary memory 205 by the sensor data management unit 202.

A description is given with reference to Fig. 8. The data search unit 206 searches the charging station use evaluation unit 156 for today's use frequency transition, and also searches the charging station history DB 218 for the statistical data on the charging station use frequency at the same time of the year (S18). The sensor data management unit 202 stores the search results in the data management secondary memory 205.

The data search unit 206 searches the power history DB 219 for the power data in the period from which the similar weather measurement data has been extracted (S19). The search result is stored in the data management secondary memory 205 by the sensor data management unit 202.

The data search unit 206 searches the data management secondary memory 205 for weather measurement data history, and sends the search result to the environmental analysis unit 211, which analyzes the result (S20). In this process, the data search unit 206 generates spatially interpolated data obtained through planer interpolation on the pieces of sensor data as pieces of point information, based on the current sensor data (weather measurement data) and the time variation history.

With reference to Fig. 13, an overview of a method for generating the spatially interpolated data based on the pieces of sensor data as the pieces of point information will be described.

First, the geographical information processing unit 212 searches for the area where the distributed power sources are installed, and acquires pieces of data 301 from the measurement sensors installed in the found region from the data management secondary memory 205. The data search unit 206 can extract the pieces of data 301 from the measurement sensors installed in the region where the distributed power sources are installed, based on the positional coordinates of the measurement sensors.

A circumscribed polygon 302 is obtained from the extracted pieces of data. The circumscribed polygon 302 can be obtained through a convex hull computation method based on computational geometry. Then, lattice points are set at a predetermined interval in the circumscribed polygon 302, and the amount of sunlight, the wind power, the wind speed, and the like at each lattice point are calculated.

The amount of sunlight, the wind power, and the wind speed at each lattice point are obtained by interpolation, for example. Three closest points from the lattice point as the calculation target are selected from the three vertices in such a manner that the three points are not linearly arranged. Thus, the following Formula (1) is obtained, where V represents a measured value at the lattice point, Li represents the distance from a lattice point to a measurement point i, and Vi represents a measured value at the measurement point.

$$V = \Sigma(Vi\ /\ Li)\ /\ \Sigma(1\ /\ Li)\ \dots\ (1)$$

How the measured value V at the lattice point varies can be predicted by using the history of the weather measurement data. For example, a future value of the amount of sunlight can be predicted as follows. Specifically, the change speed of the amount of sunlight in the past is obtained from the history data of each time point, and is applied to the current amount of sunlight.

The change speed of the amount of sunlight can be obtained by dividing the difference between two different time points in the amount of sunlight by the difference between the time points in time. The change speed of the wind speed and the wind direction can be obtained in a similar manner.

The interpolation of the pieces of environmental information (pieces of weather measurement data) is performed for each region where a group of the measurement sensors is installed. The calculation result is stored in the data management secondary memory 205 by the sensor data management unit 202.

Referring back to Fig. 8, the data distribution analysis unit 209 analyzes traffic conditions based on travel routes of a plurality of EVs (S21). The data distribution analysis unit 209 also predicts, for example, the area and changes of traffic congestion based on the past travel history of a plurality of EVs.

The data distribution analysis unit 209 selects an EV moving at a travel speed lower than a predetermined speed set in advance from the travel histories of a plurality of EVs stored in the data management secondary memory 205. The data distribution analysis unit 209 associates the position of the selected EV with the road shape data. More specifically, the data management secondary memory 205 is searched for the information on the EV detected twice or more to have been traveling at a travel speed equal to or lower than the predetermined speed.

The position of the EV is associated with the road shape data as follows. The data distribution analysis unit 209 selects the data on the EV traveling at a speed equal to or lower than the predetermined speed set in advance (for example, 10 km per hour). The positional of the EV on the road is determined with the positional information on the EV. Thus, the geographical information processing unit 212 associates the position of the EV with a position on the geometrical shape data.

The road segment is expressed with coordinate strings. When the position of the EV matches none of the coordinate strings, the data distribution analysis unit 209 maps the EV position on the road segment closest to the position of the EV (with the shortest perpendicular line between the EV position and the road segment).

As described above, the data distribution analysis unit 209 associates the position of the EV traveling at a speed equal to or lower than the predetermined speed with a position on the road shape data. The data distribution analysis unit 209 selects pieces of EV data adjacent to each other within a predetermined distance set in advance. The data distribution analysis unit 209 obtains a cluster (set) of the pieces of EV data, adjacent to each other within a predetermined distance and involving the traveling speed equal to or lower than the predetermined speed. The data distribution analysis unit 209 extracts a section of a road segment in the cluster and associates the section with the travel time. The information as the combination of the section of the road segment and the travel time is stored in the data management secondary memory 205.

The information control system 110 selects the EV data D10 to be transmitted to the EV guidance application system 140 (S22). All the received pieces of EV data D10 may be transmitted to the EV guidance application system 140, but this configuration involves a large amount of data, which results in a low processing speed. Thus, in the present embodiment, the EV data D10 on the EV requiring no guidance is not transmitted to the EV guidance application system 140, whereby a higher processing speed is achieved. To achieve this configuration, the data filtering unit 210 prevents the EV data 10 on the EV with the remaining amount of power higher than a predetermined value from being transmitted to the EV guidance application system 140. The EV with the remaining amount of power higher than the predetermined value needs not to be charged, and thus is determined to require no guidance to any charging station. For example, the EV in the full charged state is excluded from the guidance target.

When a destination is set for the guidance target EV selected in Step S22, the information control system 110 starts the shortest path search function of the geographical information processing unit 212, to calculate the shortest path for the EV to reach the destination (S23).

The shortest path is calculated by using the road network in the map with the passing time of the road as the cost information. The route involving the smallest cost is set as the shortest path. The shortest path can be calculated in accordance with a known Dijkstra algorithm.

The information control system 110 transmits the data processed by the data trend analysis unit 208, the data distribution analysis unit 209, and the environmental analysis unit 211 to the application systems 140 to 160 (S24). After the data to be transmitted is converted into a transmission format (e.g., XML) using the data conversion function of the common interface 213, the converted data is transmitted using the data transmission function. Examples of the transmitted data are as follows.

The data to be transmitted to the EV guidance application system 140 may include, for example, data related to the EV that needs to be guided (positional coordinates, the remaining-amount-of-power information, battery capacity, and travel path), road map data, positional data of the charging stations, road traffic congestion data, data indicating the available charging stations, guidance path data, and the like.

The data to be transmitted to the charging station use application system 150 may include, for example, data indicating the available charging stations, data related to the amount of power supply in the region, and the like. The data indicating the available charging stations does not include a charging station under inspection work and thus is unavailable, for example.

The data to be transmitted to the regional power control application system 160 may include, for example, weather trend data, road map data, power distribution map data, and the like.

The information control system 110 transmits the pieces of data described above to the application systems 140 to 160. Thus, the control center 1 can guide the guidance target EV to a predetermined charging station. An overview of a method for the guidance is described.

(First process)

When an EV enters the managed region, the control center 1 determines whether the remaining amount of power runs out before the EV reaches the destination. Upon determining that the power runs out, the control center 1 searches for all the available charging stations within a predetermined distance from the travel path of the EV, and sets the found charging stations as used charging station candidates.

(Second process)

The control center 1 calculates a path from the guidance target EV to each of the used charging station candidates, and calculates an estimated arrival time. The control center 1 compares the estimated arrival time of the guidance target EV at the used charging station candidate with the use reservation that has been set for the charging station. Thus, the control center 1 determines whether overbooking occurs when the guidance target EV is guided to the used charging station candidate. The control center 1 estimates the time required for charging the remaining amount of power of the guidance target EV up to a predetermined value, and determines whether the estimated charging time can be secured in the used charging station candidate. The charging station in which conflict with the already set use reservation does not occur and the charging time can be secured is set as a selected charging station candidate. Here, whether the overbooking occurs needs not to be strictly determined. The charging station that can be used after waiting for a while may not be determined to cause the overbooking.

(Third process)

When the EV needs to wait before the charging station becomes available, the control center 1 calculates a waiting time. When the calculated waiting time (predicted value of the waiting time) exceeds a predetermined waiting time set in advance, the control center 1 cancels the use reservation of the charging station. For example, even when it has been determined by the first selection that there is no waiting time, the guidance target EV needs to wait until the charging for the EV that has made the reservation first is completed, when the arrival of the EV that has made the reservation first delays for example. When this waiting time is predicted to exceed the predetermined waiting time, the use of the charging station canceled.

(Fourth process)

The control center 1 determines the charging station as the guidance destination for each EV as described above, and thus generates a guidance schedule covering all the guidance target EVs. The control center 1 selects from a plurality of guidance schedules, the guidance schedule in which the operation rate of the charging stations is high and the waiting time before the charging starts is shortest as a whole.

Operations of the EV guidance application system 140 are described with reference to Fig. 8. The EV guidance application system 140 receives the data from the information control system 110 through the common interface 141 (S25). The data received from the information control system 110 is encoded with the security processing function of the common interface 141. The encoded data is converted from a general conversion format such as XML for example to a predetermined data format that can be processed by the EV guidance application system 140. The EV data management unit 142 stores the data converted into the predetermined data format in the EV data memory 148.

The EV travel prediction unit 146 predicts the current locations of all the guidance target EVs (S26). The following Formula (2) is obtained where LNG represents the distance between previous positional information and the latest positional information associated with the road segments, T1 and T2 represent the arrival times of the EV at the two points, and C represents the travel speed.

$$C = LNG / T2 - T1 \ldots (2)$$

A travel distance Length of the EV at a point with no data acquired can be obtained in the following Formula (3) where $\Delta t$ represents the travel time.

$$Length = C\Delta t \ldots (3)$$

A description is given with reference to Fig. 9. The information control system 110 transmits, for example, the road data, the positional data on the EV, the positional data on the charging station, and an estimate value of the travel speed and the remaining amount of power of the EV, to the display application system 130 (S27). The display application system 130 receives the data from the information control system 110 through the common interface 131, and transmits the data to the display data generation unit 132 so that the display data is generated. The display application system 130 displays the generated display data on the display screen 100.

The positional information on the road shape data and the positional information on the charging station are not changed so often. Thus, the pieces of positional information need not to be constantly transmitted to the display application system 130 from the information control system 110, and may be transmitted only when needed. For example, the road shape data and the charging station data may be transmitted to the display application system 130 from the information control system 110 when the road shape is changed by a road construction and when the charging station is newly installed.

As described above with reference to Fig. 1, the EV and the charging station are symbolized by the display data generation unit 132 to be displayed on the display screen 100.

In Fig. 1, the EVs 103A to 103F and the charging stations 102A and 102B are displayed as symbols. With the symbolization, a larger amount of information can be displayed on the display screen 100. Not only the symbols but also a still image and a moving image may be displayed on the display screen 100.

The EV guidance application system 140 transmits the estimated speed information for calculating the movement of the EV, to the display application system 130. The display application system 130 displays the estimated speed of the EV on the display screen 100. The display data generation unit 132 displays the movement of the EV in accordance with Formula (3), while changing $\Delta t$. Thus, travel states of a plurality of EVs are simultaneously displayed on the display screen 100.

The EV data search unit 143 searches for one piece of EV data among the EV data stored in the EV data memory 148 as data to be processed (S28).

The EV travel time calculation unit 145 calculates the travel time and the remaining amount of power of the target EV (S29). The EV travel time calculation unit 145 calculates the time required for passing through each road segment and the travel time required for the target EV to reach the destination, based on the travel path data on the target EV. Furthermore, the EV travel time calculation unit 145 calculates the remaining amount of power of the target EV that depends on the travel time. Thus, the transition of the remaining amount of power can be predicted by calculating, for each road segment, the decreased amount obtained from the time required for passing through the segment.

The remaining amount of power W at the destination can be obtained from the following Formula (4), where E represents the current remaining amount of power, and Pi represents the amount of power consumed for passing through a road segment i.

$$W = E - \Sigma Pi \ \ldots \ (4)$$

The EV selection unit 144 selects an EV to be guided (S30). The EV selection unit 144 selects the EV with the remaining amount of power W, calculated in Step S29, smaller than a predetermined value, as the guidance target EV. The EV selection unit 144 stores the data on the selected EV in the EV data memory 148.

$$W + \Delta W < 0 \ \ldots \ (5)$$

More specifically, the EV satisfying the above Formula (5) is selected as the guidance target. In the formula, $\Delta W$ represents deviation. The EV can reach the charging station with an extra remaining amount of power by taking the deviation $\Delta W$ into consideration.

The data, corresponding to the EV identification code of an EV with the remaining amount of power equal to or larger than the predetermined value, from a guidance table T10. The EV identification code of the guidance target EV is registered in the guidance table T10 of the EV data memory 148.

A configuration example of the guidance table T10 is described with reference to Fig. 14. The guidance table T10 is generated for each guidance target EV and the following items C100 to C104 are managed therein.

An EV identification code C100 is a code for uniquely identifying the guidance target EV. A guidance state C101 is information indicating whether the guidance target EV is moving in accordance with the guidance path instructed by the control center 1. When the EV is moving under the guidance, no instruction code is provided in the guidance state C101. When the EV moves out of the guidance path and away from the guidance destination, the instruction code is provided in the guidance state C101.

A charging station code C102 is information for identifying the charging station as the guidance destination (a predetermined charging station). A guidance path C103 is information indicating a guidance path to the charging station as the guidance destination. The guidance path C103 is, for example, expressed as a string of map shape data (pieces of coordinate data). An arrival time C104 is a predicted arrival time of the EV at the charging station as the guidance destination.

The guidance destination charging station code C102, the guidance path C103, and the arrival time C104 are provided for each charging station as the search target.

Of the pieces of information managed in the guidance table T10, the EV identification code C100 and the guidance state C101 are received from the information control system 110. The guidance destination charging station code C102, the guidance path C103, and the arrival time C104 are registered after the guidance path to the charging station is determined.

The EV selection unit 144 determines whether the processing for detecting a guidance target has been performed for all pieces of EV data (S31). If there remain unprocessed pieces of EV data (S31: NO), the processing returns to Step S28, and the next EV data is selected as the processing target.

When the process has been performed for all pieces of EV data (S31: YES), the EV travel time calculation unit 145 searches for a path to reach the available charging station for the guidance target EVs. Data on the available charging station is acquired from the information control system 110 in Step S24. The EV travel time calculation unit 145 transmits data, used for calculating the path to guide the guidance target EV to the charging station, to the information control system 110.

The information control system 110 transmits the pieces of data to the geographical information processing unit 212 through the common interface 213. The geographical information processing unit 212 searches for the shortest path from the current location of the guidance target EV to the charging station (available charging station). The search result of the geographical information processing unit 212 is transmitted to the EV guidance application system 140 through the common interface 213. The guidance destination charging station ID, the guidance path, and the arrival time at the charging station calculated by the information control system 110, are stored in the guidance table T10.

Instead of the configuration where the shortest path is searched in the information control system 110 described above, a configuration where the shortest path is searched in the EV guidance application system 140 may be employed. The shortest path for guiding the guidance target EV to the charging station can be calculated in any configuration where a geometrical information processing unit is available for the EV guidance application system 140. The cost of the road segment is the time it takes to pass through the segment. Thus, the shortest guidance path can be obtained by summing the costs (passing time) of the road segments from the current location of EV to the charging station.

The EV guidance application system 140 determines whether the shortest paths to reach all the available charging stations have been calculated for each guidance target EV (S33). When there remains a charging station that has not been subjected to the calculation (S33: NO), the processing returns to Step S32.

When the calculation has been performed for all the charging stations (S33: YES), the EV guidance application system 140 transmits data in the guidance table T10 to the charging station use application system 150 through the common interface 141 (S34).

The charging station use application system 150 receives information on the available charging stations from the information control system 110 and receives the data on the guidance table T10 from the EV guidance application system 140 through the common interface 151, and stores the received information in the charging station use data memory 158 through the charging station data management unit 152.

A description is given with reference to Fig. 10. The charging station use application system 150 sets priorities to a plurality of selected charging stations (S36). A plurality of charging station are installed in in the managed region, and a plurality of charging stations are generally available for the guidance target EV. Thus, the charging station use evaluation unit 156 sets the priorities to the plurality of charging stations.

The charging station data selection unit 154 calculates an evaluation value S for setting the priority on the basis of a preference parameter of the EV user, stored in the preference DB 157, through the following linear Formula (6).

$$S = A1 \times T1 + A2 \times T2 + A3 \times T3 \ … \ (6)$$

$$(A1 + A2 + A3 = 1)$$

A1, A2, and A3 represent weighting parameters. The preference parameter is used as the weighting parameter. A value of the preference parameter differs among the EV users. T1 represents a charging time. T2 represents a time required for moving from the current location to the charging station. T3 represents a period during which the EV needs to travel at a speed equal to or lower than a predetermined speed (equal to or lower than 5 km per hour), that is, a period during which the EV gets involved in the traffic congestion. The preference parameter differs depending on the personality, purpose for driving, and the like of each EV user, that is, among the user who wants the time T1 required for charging to be short as much as possible, a user who puts the highest priority on reaching the charging station with the short period of time, and a user who would not want to be involved in the traffic congestion.

The charging station data selection unit 154 sequentially selects data on the charging station starting from that with the smallest evaluation value S. The charging station data selection unit 154 rearranges the combinations among the charging station data selection unit 154, the arrival time C104, and the guidance path C103 to the charging station in accordance with the selected order, in the guidance table T10 stored in the charging station use data memory 158. More specifically, the charging station data selection unit 154 rearranges the sets each including the items C102 to C104 in the guidance table T10 stored in the charging station use data memory 158 in the ascending order of the evaluation value S.

The charging station use evaluation unit 156 verifies the possibility of the guidance target EVs reaching charging stations (S37). The arrival time T at the charging station can be recognized since the path from the current location to the charging station and the arrival time of the guidance target EV are stored in the guidance table T10 in the charging station use data memory 158.

Thus, the following Formula (7) is obtained, where E represents the remaining amount of power of the guidance target EV, $\Delta E$ represents the extra remaining amount of power, and C represents the consumed amount of power calculated from the arrival time.

$$C > E + \Delta E \quad \dots \quad (7)$$

The charging station that satisfies the above Formula (7) is excluded from the charging stations as the guidance destination candidates, because the consumed amount of power C for reaching the charging station is larger than the value obtained by adding the extra amount $\Delta E$ to the remaining amount of power E and thus the guidance target EV is less likely to be able to reach the charging station. Thus, charging station data selection unit 154 erases the data, related to the charging station to which the EV is less likely to be able to reach, from the guidance table T10 in the charging station use data memory 158 through the charging station data management unit 152.

The charging station data selection unit 154 determines whether there are selectable charging stations (charging stations serving as guidance destination candidates) (S38). If there are no charging stations as guidance destination candidates (S38: NO), the charging station use application system 150 transmits an alert to the EV guidance control system 170 (S39). The alert is transmitted to the system 170 managing the EV that might stop in the course of travelling due to the battery exhaustion. The alert includes an EV identification code for identifying the EV that might stop due to the battery exhaustion.

If there is one or more charging stations serving as guidance destination candidates (S38: YES), the charging station use evaluation unit 156 calculates, for the charging station as guidance destination candidate, an arrival time required to reach the charging station and a charging time required to charge the EV to be in the full charged state at the charging stations (S40).

A charging time t can be obtained from the following Formula (8), where Y represents an estimated value of the remaining amount of power when the guidance target EV arrives at the charging stations serving as guidance destination candidate, G represents the maximum capacity of the battery installed in the EV, and P represents the charged amount of the battery per unit time.

$$t = (G - Y)/P \quad \dots \quad (8)$$

The EV user feels safer when the battery of the EV is charged to be in the full charged state (G), but the battery does not necessarily have to be charged to be in the full charged state. For example, to shorten the total time required to reach the destination as much as possible, the charging amount less than 100% such as 80%, 70%, and 60% might be enough.

The charging station use application system 150 sets a charging schedule for the charging station selected as the guidance destination candidate (S41).

The charging station use schedule change unit 155 generates or changes the use schedule of the charging station by using the estimated arrival time T at the charging station registered in the guidance table T10, and the time t calculated in Step S40.

The charging station use schedule change unit 155 refers to the use schedule data of the charging station found in the charging station use data memory 158 and secures the charging time for the guidance target EV. The charging station use schedule change unit 155 adds a new schedule related to the EV that needs to be charged to the charging schedule that has been made.

A method for setting a charging schedule related to a charging station will be described with reference to the chart in Fig. 15. Here, a case is described where the charging stations in a predetermined geographical range are managed as a group. For example, when the predetermined range includes a plurality of charging stations, the charging stations are managed as a single group, whereby the charging schedule can be adjusted between the charging stations within the group. The charging station group may be regarded as a virtual charging station including a plurality of charging stations. In Fig. 15, a method for adjusting the charging schedule among four charging stations including first to fourth charging stations is described. The four charging stations are in the same group.

The vertical axis of in Fig. 15 represents a management number of the charging station and the horizontal axis in Fig. 15 represents time. The management number of the charging station (charging station ID) may be any unique number in a managed region of the control center 1. For example, Fig. 15 shows a charging schedule in a time zone from 13:00 to 17:00.

Lateral lengths 401, 407, 408, 409, 410, and 411 of boxes in Fig. 15 each represent the time during which the charging station is occupied the EV for the charging. A left side of each box (reference number 402 for example) represents the scheduled start time of the charging. A right side of each box (reference number 403 for example) represents the scheduled end time of the charging. In the description below, the EV is identified with a combination of the identification number (EV identification code) of each EV in the box and the reference numerals.

EVs #785 (404), #2765 (405), and #11 (406) indicated by dotted lines in Fig. 15 represent EVs that are expected to be added to the charging schedule that has been made.

It is assumed that the second charging station is appropriate for charging the EV #785 (404). The EV #785 (404) is scheduled to arrive at the second charging station slightly before 15:00. The scheduled end time of the charging of the EV #785 (404) overlaps with the scheduled time of the charging of the EV #45 (410).

Thus, the charging station data selection unit 154 searches the charging station schedule data for the next charging station available for the EV #785 (404). The charging station data selection unit 154 selects the charging station offering the second closest arrival time T at the charging station and the second shortest time t required for the charging. Here, it is assumed that the first charging station is the charging station with the second highest priority for the EV #785 (404).

The charging station use schedule change unit 155 determines that the EV #785 (404) can be charged in a time zone between the scheduled end time of the charging of the EV #23 (408) and the scheduled start time of the charging of the EV #304 (409), and thus changes the schedule.

The charging station use schedule change unit 155 allocates the charging station to the guidance target EV in accordance with the following rules.

(1) A first rule is that the charging station with a higher priority is selected more preferentially from the charging station data D11 stored in the guidance table T10.

(2) The second rule is that the remaining amount of power of the EV is prevented from running out before the charging starts.

(3) The third rule is that the waiting time of each EV is minimized.

(4) The fourth rule is that the use efficiency of the charging station is maximized.

Based on the rules described above, the charging station use schedule change unit 155 determines to charge the EV #785 (404) after the EV #23 (408) is charged and before the EV #304 (409) is charged.

The schedule change for the EV #11 (406) will be described. The third charging station is first allocated to the EV #11 (406). In other words, the third charging station has the highest priority for the EV #11 (406). However, the result of calculating the latest value of the scheduled arrival time of the EV #11 (406) at the third charging station indicates that the third charging station is occupied by the other EV #3 (407) at the scheduled arrival time of the EV #11 (406).

Thus, it is assumed that the charging station use schedule change unit 155 has found the fourth charging station as the charging station with the second highest priority. However, the arrival time of the EV #11, which can arrive at the third charging station early, at the fourth charging station is late due to the travel distance, the traffic congestion, or the like (reference numeral 411).

Thus, when the EV #11 is guided to the fourth charging station, the remaining power might run out before the charging starts. In such a case, the charging station use schedule change unit 155 adjusts the schedule in such a manner that the third charging station remains unchanged as the guidance destination, and the charging of the EV #11 starts after the charging of the EV #3 is completed. Thus, while the waiting time for the EV #11 (406) before the charging starts extends a little, the EV #11 (406) can reach the third charging station without battery exhaustion. The battery exhaustion is a state where the remaining amount of power of the battery installed in the EV is substantially 0. The EV immediately stops when the battery exhaustion occurs.

The charging station with the highest priority for the EV #2765 (405) is the third charging station. However, the second charging station with the second highest priority is allocated to the EV #2755 (405), to improve the use efficiency of the second charging station or the use efficiency of the charging station group as a whole.

Referring back to Fig. 10, the charging station use application system 150 determines whether the charging schedule has been set for all the guidance target EVs (S42). When there is an EV that has not been subjected to the scheduling in the EV data memory 148 (S42: NO), the processing returns to Step S36.

When the scheduling has been performed on all the guidance target EVs (S42: YES), the charging station use schedule change unit 155 readjusts the schedule for each EVs registered in the guidance table T10 (S43). Thus, the scheduling for the charging stations is executed for a plurality of times to add the scheduling of the EV, for which the charging schedule needs to be newly set, to the scheduling data selected from the pieces of scheduling data that have been generated. The charging station data management unit 152 stores and manages the scheduling data thus generated in the charging station use data memory 158.

A description is given with reference to Fig. 11. The charging station use evaluation unit 156 evaluates the charging station use schedule (S44). The charging station use evaluation unit 156 evaluates a plurality of pieces of scheduling data and selects one optimum scheduling data from the pieces of scheduling data, based on the following rules for example.

As a first rule, the schedule involving the small number of EVs that are likely to cause the battery exhaustion is preferentially selected. The charging station use evaluation unit 156 preferentially selects the schedule involving the number of EVs, of which the remaining amount of power runs out in the course of traveling to the destination, smaller than the other schedules by a predetermined level. Thus, a schedule involving large number of EVs that cause the battery exhaustion is set to have a low priority and thus is less likely to be selected.

As the second rule, the schedule involving a small sum of the total unused time of the charging stations and the total charge waiting time of the EVs is preferentially selected. More specifically, the charging station use evaluation unit 156 preferentially selects the schedule with the minimum sum of TF + TS, where TS represents the total unused time, that is, the total idling time of the charging station, and TS represents the total charge waiting time of the EVs.

The result of the charging station use scheduling and information on the EVs that might cause battery exhaustion generated by the charging station use application system 150 are transmitted to the EV guidance control system 170 through the common interface 151 and the like (S45).

The EV guidance control system 170 recognizes the charging station use scheduling. The EV guidance control system 170 deals with the EV that might cause the battery exhaustion. Specifically, the position where the battery exhaustion might occur is predicted based on the positional information on the EV, the predicted value of the travel speed of the EV, and the location and the passing time of the traffic congestion. Thus, a rescue vehicle for exchanging the battery can be dispatched to the EV that has stopped due to the battery exhaustion, as will be described later in another embodiment.

A functional configuration of an EV guidance control system 170 for monitoring a guidance state of an EV is described with reference to Fig. 16. In the present embodiment, a case is described where the EV guidance control system has a dispersed structure including the general vehicle control system 170A, the commercial vehicle control system 170B, and the public vehicle control system 170C. However, this should not be construed in a limiting sense. EVs with various uses may be managed by a single EV guidance control system. Furthermore, when a large number of guidance target EVs travel in the managed region, a plurality of EV guidance control systems 170 may be installed, so that the processing load is distributed.

The EV guidance control system 170 includes, for example, a common interface 171, an EV data management/search unit 172, a display unit 173, a check unit 174, an ignore determination unit 175, a display screen 176, and an EV data memory 177 as described below.

The common interface 171 serves as a function of exchanging data between the information control system 110 and EVs. The common interface 171 includes, for example: a data collection function of collecting the positional information on each guided EV and information on the selected charging station; a data transmission function of transmitting, to the guidance target EV, information on a guidance path for guiding each guidance target EV to a predetermined charging station and information on the predetermined charging station or a plurality of charging stations including the predetermined charging station; a security processing function of encoding the data and decoding the encoded data; and a data conversion function of converting the data into a predetermined format.

The EV data management/search unit 172 serves as a function for managing the data related to the EV stored in the EV data memory 177 and searching the data related to the EV stored in the EV data memory 177 for the data satisfying the predetermined condition. The data related to the EV includes, for example, data indicating the guidance state of the EV, data on the positional information on and the remaining amount of power the EV that might cause the battery exhaustion (exhaustion of the remaining power), and the like.

The display unit 173 serves as a function of generating the display data in which a predicted value for the EV guidance (estimated position of the EV) and the predicted value of the power consumption of the EV are associated with the road map.

The check unit 174 serves as a function of checking the scheduling result.

The ignore determination unit 175 serves as a function of determining whether the EV has ignored the guidance. It can be determined that the guidance target EV is travelling while ignoring the guidance, when the EV has separated from the guidance path by a determination threshold set in advance or longer. The ignore determination unit 175 issues an alert when the EV travelling while ignoring the guidance is found.

The display screen 176 serves as a function of symbolizing the EVs, the charging stations, and the like to be displayed on the road map.

A functional configuration of the charging station control system 180 will be described with reference to Fig. 17. The charging station control system 180 manages the charging stations as the management target in the managed region. The charging station control system 180 includes, for example, a common interface 181, a charging station data management/search unit 182, a display unit 183, a charging station use check unit 184, a charging station energizing/de-energizing unit 185, a display screen 186, and a charging station use data memory 187 as described below.

The common interface 181 serves as a function of exchanging data between the information control system 110 and charging stations. The common interface 181 has a data reception function, a data transmission function, a security processing function, and a data conversion function.

The charging station data management/search unit 182 serves as a function of managing data stored in the charging station use data memory 187 and searching the data stored in the charging station use data memory 187 for predetermined data (data indicating the use state of the charging station).

The display unit 183 serves as a function of generating data for displaying the power supply/demand state of the charging station, and transmitting the data to the display screen 186.

The charging station use check unit 184 checks the use state of the charging station in unit of a predetermined time period.

The charging station energizing/de-energizing unit 185 serves as a function of setting the charging station to be a station in the non-operation state or to be in the available state. For example, the charging station energizing/de-energizing unit 185 may set a charging station to be in a station in the non-operation state for maintenance. The charging station energizing/de-energizing unit 185 may set the charging station to be in the operation state when the maintenance is completed.

The display screen 186 displays the power supply state to the charging station and the power consumption state in the charging station.

The charging station use data memory 187 stores the availability of charging stations (data indicating the non-operation or operation state) and the use scheduling data.

A functional configuration of the regional power control system 190 will be described with reference to Fig. 18. The regional power control system 190 is a system for controlling distributed power sources in a managed region. The regional power control system 190 includes, for example, a common interface 191, a power data management/search unit 192, a discharge instruction unit 193, a display unit 194, a display screen 195, a power data memory 196, and a power supply determination unit 197 for determining whether power needs to be supplied described below.

The common interface 191 serves as a function of communicating data between the information control system 110 and power system equipment and distributed power sources. The common interface 191 acquires information on power from each of the power system equipment and the EV guidance application system 140. For example, the common interface 191 acquires the data related to the power consumption in the managed region from power, current, and voltage meters disposed in the grid. The common interface 191 acquires the scheduling data for guiding the EV from the EV guidance application system 140 through the information control system 110. When the EV is guided to the charging station, the EV is charged at the charging station, and thus the power consumption in the managed region increases. The common interface 191 issues a predetermined instruction to the distributed power sources (the photovoltaic power system, the wind energy conversion system, the power storage device, and the like).

The power data management/search function 192 manages the data stored in the power data memory 196 and searches the data stored in the power data memory 196 for predetermined data such as data indicating the amount of power of the power storage device in the managed region.

The discharge instruction unit 193 compares the result of the simulation related to the power supply to the charging station executed in the regional power control application system 160 with actual power supply/demand states of the charging stations. The discharge instruction unit 193 shows the required discharge amount and instructs the discharging to at least part of the distributed power sources in the managed region upon determining that power supplied to the charging station is not enough. Thus, for example, the power storage device that stores the power generated by the photovoltaic power system, the power storage device that stores the power generated by the wind energy conversion system, the power storage device that stores the power from the grid, and the like discharge the instructed amount of power to the grid. At least some amount of discharged power is supplied to the charging station, to charge the EV through the charging station.

The display unit 194 serves as a function of generating the display data for displaying the power supply/demand data collected by the power information collection adapter 123 and the predicted data on power consumption due to the EV guidance while being associated with the road map, and transmitting the display data to the display screen 195. The display screen 195 is a device that displays the power supply/demand state and the power storage state of the distributed power sources and the like in the managed region.

The power data memory 196 is a memory for storing information related to the states of the distributed power sources in the managed region.

The power supply determination unit 197 serves as a function of identifying the region requiring the power supply by referring to the predicted data on the charging station use frequency and the power demand data.

Processing performed by the EV guidance control system 170 for determining whether EV guidance has been ignored is described below with reference to the flowchart in Fig. 19.

The EV guidance control system 170 acquires information on a guided EV and information on a guidance path (S50). The EV guidance control system 170 receives the data related to the guided EV and the corresponding guidance path through the common interface 171, and stores the data in the EV data memory 177 through the EV data management/search unit 172.

The EV data management/search unit 172 calculates the distance between the position of the guided EV and the guidance path (S51). The EV data management/search unit 172 searches the EV data memory 177 for the positional coordinates of the guided EV and the guidance path corresponding to the EV. The check unit 174 calculates the distance between the position of the guided EV to the closest guidance path. The check unit 174 calculates the smallest value of the perpendicular lines dropped to a plurality of road segments, forming the guidance path, from the position of the guided EV.

The ignore determination unit 175 determines whether the distance calculated in Step S51 (distance between the EV the guidance path) is equal to or larger than a predetermined value (S52). If the distance between the EV and the guidance path is equal to or larger than the predetermined value (S52: YES), the ignore determination unit 175 determines that the EV is travelling while ignoring the guidance, and issues the alert to the EV (S53).

The ignore determination unit 175 issues the warning to the EV that has ignored the guidance through the common interface 171. The warning may include a message such as, for example, "you are driving out of the guidance path. Please follow the guidance to drive to the charging station and charge the battery". The user can be notified of the message through an information terminal installed in the EV for example. The information terminal may be a car navigation system. Furthermore, a configuration may be employed where a user is notified of the warning message transmitted to a mobile information terminal of the user.

If the distance between the EV and the guidance path is not equal to or larger than the predetermined value (S52: NO), it can be determined that the EV is travelling under the guidance.

After determining whether the EV has ignored the guidance, the EV guidance control system 170 checks whether the determination has been made on all the guided EVs (S54). The processing returns to Step S50 when there is an EV on which the determination has not been made (S54: NO), and is terminated when the determination has been made on all the guided EVs (S54: YES).

An example of a method for predicting the power supply/demand in the managed region and controlling the state of the charging station based on the prediction result is described with reference to Fig. 20 and Fig. 21.

The control center 1 of the present embodiment at least partially adjusts the power supply in the managed region in accordance with the use frequency of the charging station. The grid power is generated in any large centralized power source such as a fossil-fuel power plant and is supplied to customers through transmission and distribution lines. The control center 1 may not be capable of controlling the distribution of the grid power. However, the distributed power sources in the managed region can be managed and controlled by the control center 1.

When a large number of EVs travel in the managed region and thus a large number of EVs are charged by the charging stations in the managed region, the power of the charging station might fall short. In other words, the demands for charging of a large number of EVs might not be satisfied by the power supplied from the grid to the charging stations only.

Thus, in the present embodiment, the power supply/demand in the managed region is controlled under the following policies.

(1) As a first policy, when the amount of power that can be consumed by the charging stations is limited, the charging station exhibiting a use frequency lower than a predetermined value set in advance is set to be a station in the non-operation state.

The charging station with a high use frequency is kept in the operation state unless otherwise required. The non-operation charging stations within a predetermined range from the charging station exhibiting a high use frequency are set to be stations in the operation state. In other words, in a predetermined region, in the management region, involving a high use frequency of the charging station, the number of charging stations in the operation state is increased. In the other predetermined region, in the management region, involving a low use frequency of the charging station, the number of charging stations in the operation state is reduced.

(2) As a second policy, in the region involving a high use frequency of the charging station, the power from the distributed power sources are used in the charging stations.

The power from the distributed power sources installed in the region involving a high use frequency of the charging station, and the power from the distributed power sources installed in a region adjacent to the region involving a high use frequency of the charging station are transmitted to and thus consumed in the region involving a high use frequency of the charging station.

In the present embodiment, the regional power control application system 160 and the charging station use application system 150 work together to control the regional power supply/demand under the policies described above.

Specifically, the regional power control application system 160 refers to the use frequency of the charging station transmitted from the information control system 110. The use frequency of the charging station changes in various ways in accordance with a parameter such as, for example, seasons, holidays, time zones within a day, regional features (city, countryside, tourist spot, or the like), or a combination of these.

For example, in the city, the use frequency of the charging station is not so high during the holidays and during a vacation, because the users are likely to go out of town for recreation or relax at his or her home. Thus, the use frequency of the charging station is high in the countryside and holiday resorts, during the holidays and vacations. On the other hand, during the weekdays, the use frequency of the charging station is high in the city and is low in the countryside and the like.

A description is given below with reference to the flowchart in Fig. 20. The regional power control application system 160 acquires certain history information from the information control system 110 and stores the information (S60). The common interface 161 of the regional power control application system 160 acquires the information indicating the supply history of the power data within a day from the information control system 110. The common interface 161 acquires information indicating the past history of the similar power demand from the power history DB 219. The common interface 161 further acquires information indicating change history of the weather data from the weather history DB 220.

The information related to the power in the information acquired from the information control system 110 is stored in the power data memory 168 through the power data management unit 162. The information related to the weather in the information acquired from the information control system 110 is stored in the weather data memory 169 through the weather data management unit 165.

The regional power control application system 160 predicts power demand in the managed region (S61) . The power data search unit 163 searches the history data of the power demand stored in the power data memory 168 for the history data indicating the similar power demand trend. The power supply calculation unit 164 obtains the speed of the power change based on the history data of the power demand thus found, and calculates the change value of the power demand relative to the current power change. The change value of the power demand can be calculated by calculating the change amount after the time change $\Delta t$ based on the change speed obtained from the history data of the power demand, and by adding the change amount to the value of the current power demand. The regional power control application system 160 predicts the change in the power demand for each of a plurality of regions set by dividing the managed region.

The regional power control application system 160 transmits the power demand prediction result calculated in Step S61 to the charging station use application system 150 through the common interface 161.

The charging station use application system 150 receives the power demand prediction result transmitted from the regional power control application system 160 through the common interface 151 (S63).

Next, the charging station data management unit 152 in the charging station use application system 150 searches for a use frequency history stored in the charging station use data memory 158 (S64).

The charging station use evaluation unit 156 determines whether to increase or decrease charging stations based on the use frequency history of the charging stations and power demand prediction results under predetermined policies (S64). Examples of the policies are listed below.

(1) As a first policy, when the amount of power supply increases in a region with a high use frequency of the charging station, the use frequency of the charging station in the region is increased. In this case, the charging station can be determined to be newly installed.

(2) As a second policy, when the amount of power supply decreases in a region with a high use frequency of the charging station, one of the following determinations is made in accordance with whether the distributed power sources can be used: (2a) when the power from the distributed power sources can be used, the increase in the use frequency of the charging station is dealt with by causing the distributed power sources to discharge power; and (2b) when the power from the distributed power sources cannot be used, the use frequency of the charging station is decreased. For example, the number of the EV that can be charged by the charging station is limited, and the EV is not charged once the number of charged EVs reaches the limit.

(3) As a third policy, the charging station with a low use frequency is de-energized in a region with a low use frequency of the charging station and a large amount of power supply to the region. Still, the charging station is kept energized in a region with a relatively high use frequency in the region with a low use frequency.

(4) As a fourth policy, one of the following determinations are made depending on whether there is the power storage device in a region with a low use frequency of the charging station and a small amount of power supply thereto; (4a) when there is the power storage device, the power storage device is charged to prepare for the discharging in the future; and (4b) when there is no power storage device, the charging station with a low use frequency among the charging stations installed in the region is de-energized.

Under the policies described above, in the charging station use schedule change unit 155, the use history data on the charging station is analyzed, and the use frequency trend (charging station demand trend) of the charging station is determined. The use frequency trend can be classified into "use frequency increases", "use frequency decreases", "no change", and the like. Here, "use frequency increases" indicates that the demand for the charging station increases within a predetermined period, "use frequency decreases" indicates that the demand for the charging station decreases within a predetermined period, and "no change" indicates that the demand for the charging station does not change over a predetermined value within a predetermined period.

When it is determined that the use frequency (use demand) of the charging station increases (S65: increase), the charging station use schedule change unit 155 generates a control code for dealing with an increase in use frequency (S66).

The control code for dealing with an increase in use frequency includes an instruction for de-energizing at least a part of the charging stations installed in a region with a use frequency in a decreasing trend (a region with a use demand in a decreasing trend) and for reenergizing the non-operation charging stations in the charging stations in an area with a use frequency in an increasing trend. The state of the charging station is changed in a predetermined time zone in which the use frequency of the charging station increases. Thus, the predetermined time zone in which the state of the charging station is changed is clearly described in the control code. Then, the processing proceeds to a flowchart in Fig. 21 through a connector "F".

When it is determined that the use frequency of the charging station is in the decreasing trend (S65: decrease), the charging station use schedule change unit 155 generates a control code for dealing with a decrease in use frequency (S67).

The control code for dealing with a decrease in use frequency includes, for example, an instruction to de-energize at least a part of the charging stations in the region with the use frequency of the charging station in the decreasing trend. The charging station is changed from the operation state to the non-operation state, only in a predetermined time zone in which the use frequency of the charging station decreases. Thus, a control code for dealing with a decrease in the use frequency of the charging station includes the time zone in which the charging station is changed to the non-operation state. Then, the processing proceeds to the flowchart in Fig. 21 through a connector "G".

A description is given with reference to Fig. 21. The charging station use application system 150 checks whether the determination has been made on all the charging stations (S68). Whether there is a charging station on which the determination has not been made (S68: NO), the processing returns to Step S64 in Fig. 20 through a connector "H".

When the determination has been made on all the charging stations as the management targets of the control center 1 (S68: YES), the charging station use schedule change unit 155 searches the selected pieces of scheduling data, and regenerates a charging station use schedule in accordance with the determination result in Step S66 or Step S67 (S69).

The charging station use application system 150 transmits information on the state change of the charging station to the charging station control system 180 (S70). The charging station use application system 150 transmits the information on state changes of the charging stations from the common interface 151 to the charging station control system 180 through the information control system 110.

The charging station control system 180 receives information from the charging station use application system 150 through the common interface 181. The charging station control system 180 stores the received information in the charging station use data memory 187 through a charging station data management and search unit 182.

The charging station data management/search unit 182 searches a memory 187 for the information on the charging station under management, and transmits the information to the charging station use check unit 184. The charging station use check unit 184 checks the state changes of the charging stations based on the information received from the charging station data management/search unit 182 (S71).

When the state of the charging station is changed, the charging station use check unit 184 transmits data related to the charging station energizing/de-energizing unit 185. The charging station energizing/de-energizing unit 185 generates control data for changing the designated charging stations as instructed (S72).

The charging station control system 180 transmits the control data to the information control system 110 through the common interface 181 (S73). The information control system 110 that has received the control data through the common interface 221 transmits the control data to the guidance control data management unit 203. The guidance control data management unit 203 stores the control data in the control history DB 215.

The information control system 110 transmits via the information control system adapter 201 the control data to the charging station control adapter 126, and changes the state of the charging station to the operation state or the non-operation state (S74).

The charging station energizing/de-energizing unit 185 of the charging station control system 180 not only checks the use schedule of the charging station but also performs the processing of changing the state of the charging station for maintenance. The result of the processing is transmitted, as information indicating the availability of the charging station, to the information control system 110. The information control system 110 stores the latest state of the charging station in the facility/attribute DB as the attribute DB 217.

When the distributed power sources are installed in the managed region, the power obtained from the distributed power sources can be used for the charging station.

The regional power control system 190 monitors the power supply state of at least a part of the distributed power sources in the managed region. When the power supply from the monitored distributed power sources fails to reach a scheduled value, the regional power control system 190 can inform the control device of the distributed power source or a management device that manages the distributed power source that the power supply amount is insufficient.

In particular, the amount of power generated by the photovoltaic power system and the wind energy conversion system largely varies in accordance with the season, the time zone, the location, the weather, and the like. Thus, the amount of power stored in the power storage device that stores the power generated by the photovoltaic power system depends on the weather and the like. In view of the above, the regional power control application system 160 of the present embodiment determines whether a sufficient amount of power is actually supplied and the like, based on a predicted value of the amount of power supply.

An example of a method of controlling the distributed power sources in a managed region is described with reference to the flowchart in Fig. 22.

The regional power control system 190 receives information on regional power control from the regional power control application system 160 (S80). The regional power control system 190 receives from the regional power control application system 160, information on an increase in power consumption, predicted information on an increase in the use of the charging station, and data on the amount of power stored in the distributed power source in the managed region, through the common interface 191. The regional power control system 190 stores the received information in the power data memory 196. The information on an increase in power consumption, the predicted information on an increase in the use of the charging station, and the data on the amount of power stored in the distributed power source in the managed region are examples of information on regional power control.

The regional power control system 190 converts the power control information received from the regional power control application system 160 into the display data with the display unit 194, and then displays the display data on the display screen 195 (S81). The deviation between the predicted value and the actual measured value of the power demand can be easily checked from the content displayed on the display screen 195.

The power supply determination unit 197 of the regional power control system 190 determines the region and the time zone requiring the power supply, based on the information related to the power control (S82). More specifically, the power supply determination unit 197 compares the data predicting an increase in the charging station use frequency with the power demand data, to identify the region and the time zone requiring the power supply.

The power supply determination unit 197 determines the distributed power source (the power storage device in particular) from which the power is to be supplied to a predetermined region that needs the power supply (S83).

The information control system 110 inputs to the regional power control system 190, information on the power storage amount of each power storage device installed in the managed region. Thus, the power supply determination unit 197 determines the power storage device from which the power is supplied to the predetermined region.

Fig. 13 shows two power storage devices 107A and 107B as well as input points 303A and 303B to the grid of the region. The power supply determination unit 197 determines the discharge amount from the information on the power storage amount and on the discharge amount. The power stored in the power storage devices 107A and 107B is used in a charging station 102 at a region other than the region 302 surrounded by a dotted line. A discharge amount CHi from each power storage device i installed in the region 302 is obtained in the following Formula (3) where VLi represents the power storage amount of the power storage device i, CG represents a required discharge amount, the discharge amount being proportional to the power storage amount.

$$CHi = CG * Chi / \Sigma CHi \ldots (3)$$

The discharge instruction unit 193 instructs the distributed power source (the power storage device) to discharge a predetermined amount of power at a predetermined time for which the power is determined to be supplied.

The state of the EV guidance is sequentially displayed on the road map data by the display application system 130 as shown in Fig. 1. The guidance state of each EV is also displayed on the display application system 170 of the EV guidance control system 170. In each of the display screens, when an EV is selected, information on the guidance path and the charging station as the guidance destination corresponding to the EV is also displayed.

As described above with reference to Fig. 19, when the EV that needs to be charged ignores the guidance and travels out of the guidance path, the EV guidance control system 170 issues the alert to the EV. In an actual case, the EV that needs to be charged does not necessarily travel under the guidance.

A case where the EV ignores the guidance and travels out of a guidance path is described with reference to Fig. 23. In a display screen shown in Fig. 23(a), an EV 103G is guided to the charging station 102A. The EV guidance control system 170 transmits information indicating a guidance path 106C to the charging station 102A to an information terminal such as a car navigation system installed in the EV 103G. Thus, the recommended guidance path 106C is displayed on the information terminal installed in the EV 103G.

In a display screen shown in Fig. 23(b), the EV 103G is ignoring the guidance and is travelling without visiting the charging station 102A recommended as the guidance destination. When the EV 103G is separated from the charging station 102A by a predetermined distance or more, the EV guidance control system 170 determines that the EV 103G has ignored the guidance.

The EV guidance control system 170 issues a warning to the EV, and the user is notified of the warning through the information terminal in the EV and the like. Upon checking the warning, the user can request for guidance path resetting. For example, when the user operates a "guidance path reset button" displayed on the information terminal, information indicating the request for the resetting is transmitted. The EV information collection adapter 121 receives the request for the resetting.

When the EV information collection adapter 121 receives the request for the resetting, the information control system 110 sets a mode for performing the guiding again in the guidance state C101 in the guidance table T10. Thus, the information control system 110 transmits information required for resetting the guidance path to the EV guidance application system 140 and the charging station use application system 150. The EV guidance application system 140 resets the guidance path. The charging station use application system 150 resets the use reservation schedule of the charging station.

In this case, the reservation made before the EV 103G ignores the guidance remains in the use schedule of the charging station shown in Fig. 15, but is erased from the schedule so that the other EV that needs to be charged is reserved in the resultant empty time zone.

The EV guidance application system 140 performs the EV guidance again. In other words, the EV guidance application system 140 recalculates a guidance path based on the current location and the remaining amount of power of the EV 103G, for example, and displays a recalculated guidance path 106D on the display screen 100. Furthermore, information indicating the recalculated guidance path 106D is transmitted to the information terminal in the EV 103G and displayed.

In the present embodiment, the remaining amounts of power of a plurality of EVs are simultaneously monitored, and the EV that is likely to stop before reaching the destination due to the battery exhaustion is guided to an appropriate charging station. Thus, the risk of the EV stopping before reaching the destination can be reduced. Thus, a smooth traffic flow on the road can be maintained, and the user can feel safer.

In the present embodiment, the EV can be guided with a small total value of the time required for reaching the charging station as the guidance destination and the time required for the charging. Thus, the user can enjoy higher usability of the charging station.

In the present embodiment, the EVs are not guided to be concentrated to a certain charging station but are guided to be distributed to a plurality of charging stations. Thus, the use frequencies of the charging stations can be balanced.

In the present embodiment, the preference of the user related to selection of the charging station is managed in the preference DB 157 as the parameters, and the EV is guided in accordance with the preference of the user. Thus, the EV can be guided to an appropriate charging station in accordance with the purpose of the traveling and the personality of the user. The user is more likely to follow the guidance because the proposed guidance path is based on the preference of the user. As a result, the risk of the EV stopping due to the battery exhaustion to hinder a smooth flow of traffic can be reduced.

In the present embodiment, not all the EVs are guided, but the EV with a small remaining amount of power that is likely to stop is extracted to be guided to the charging station. Thus, the guidance processing can be executed with a relatively small processing load even when a large number of EVs are traveling. All things considered, the present embodiment is highly effective in a region known as a smart city for example, where the distributed power sources are efficiently utilized.

[Second embodiment]

A second embodiment is described below with reference to Fig. 24. In the present embodiment, a system for rescuing the EV that has stopped due to the battery exhaustion as a result of ignoring the guidance is described.

The control center 1 starts the processing in Fig. 24 upon determining that the EV has ignored the guidance. The control center 1 calculates a probability PP of the EV ignoring the guidance to stop and the stopped position (S100). For example, when a plurality of charging stations, other than the charging station selected as the guidance destination, are installed on a scheduled traveling path of the EV, the EV is likely to visit any one of the charging stands to charge the battery. Thus, the stop probability PP can be calculated based on the number N of the charging station on the scheduled traveling path as in Formula (9).

$$PP = 100 - N * 10 \dots (9)$$

Then, the control center 1 determines whether the stop probability PP exceeds a predetermined value (S101). When the stop probability PP is equal to or less than the predetermined value (S101: NO), the processing is terminated because a preparation for the rescue is not required for the time being.

When the stop probability PP exceeds the predetermined value (S101: YES), the control center 1 notifies the service system of the fact (S102). The notification may include the current location, the remaining amount of power, the EV identification code, and the like of the EV.

Furthermore, the control center 1 issues a second warning to the EV that is ignoring the guidance (S103). The warning may include a message such as "Low battery. Please reset the guidance path or charge the battery at the closest charging station" for example.

The EV receives the warning from the control center 1 (S104). When the EV continues to travel while ignoring the guidance, or when there is no charging station near the EV, the remaining power runs out and the EV stops (S105). The EV that has stopped calls a service system for rescue in response to a clear instruction from the user or automatically (S106). The rescue request may include the current location and the EV identification code for example.

The service system is a computer system used by a service company that rescues the EV that has caused battery exhaustion. Upon receiving the notification from the control center 1 (S107), the service system starts preparing for the rescue (S108) by, for example, loading a brand new battery on a rescue vehicle in standby or calling a rescue vehicle near the rescue target EV.

After starting the rescue preparation, the service system receives the rescue request from the EV that has stopped due to battery exhaustion (S109). The rescue request may be transmitted to the service system from the EV through the control center 1 or directly. When the notification from the control center 1 (S102) includes the EV identification code, the service system matches the EV identification code with the EV identification code in the rescue request from the EV, to determine whether the EV has ignored the guidance by the control center 1.

Upon receiving the rescue request from the EV, the service system instructs the dispatch of the rescue vehicle (S110). The rescue preparation has been started before the rescue request is transmitted by the EV, whereby the EV can be quickly rescued to solve the traffic congestion due to the stopped EV.

The present embodiment having the configuration described above also provides the same effects as the first embodiment. Furthermore, in the present embodiment, the probability of the EV, traveling while ignoring the guidance, stopping due to the battery exhaustion is monitored, and the rescue preparation is started before the EV stops. Thus, the EV that has stopped due to the battery exhaustion can be quickly rescued to restore a smooth flow of traffic, whereby the user can enjoy greater convenience.

The present invention is not limited to the embodiments described above. A person skilled in the art can make various additions, modifications, and the like within the scope of the present invention.

[Reference Signs List]

| | |
|---|---|
| 1 | Control center |
| 100 | Display screen |
| 110 | Information control system |
| 120 | Adapter |
| 130 | Display application system |
| 140 | EV guidance application system |
| 150 | Charging station use application system |
| 160 | Regional power control application system |
| 170A to 170C | EV guidance control system |
| 180 | Charging station control system |
| 190 | Regional power control system |

**Claims**

1. A charging support system for an electric vehicle,
   the system supporting charging to the electric vehicle and configured to:

   acquire predetermined electric vehicle information related to a travel state of the vehicle from among a plurality of electric vehicles;
   acquire predetermined charging station information related to a device state and a use state of the vehicle from among a plurality of charging stations;
   detect a predetermined electric vehicle that needs to be charged to reach a destination from a current location, based on the predetermined electric vehicle information acquired from each of the plurality of the electric vehicles;
   detect a predetermined charging station available for the predetermined electric vehicle from among the plurality of the charging stations, based on the predetermined charging station information and the predetermined electric vehicle information;
   detect a predetermined path for guiding the predetermined electric vehicle to the predetermined charging station;

and
transmit predetermined guidance information including the predetermined path to the predetermined electric vehicle.

2. The charging support system for an electric vehicle according to claim 1, wherein
a plurality of predetermined electric vehicles can be simultaneously detected, and
the predetermined charging station and the predetermined path are detected for each of the plurality of the predetermined electric vehicles and then transmitted to each of the plurality of the predetermined electric vehicles.

3. The charging support system for an electric vehicle according to claim 2, wherein the position and power storage amount of the predetermined electric vehicle, the positon and number of vehicles for which charging is reserved at the predetermined charging station, and the predetermined path are displayed overlapped on a map.

4. The charging support system for an electric vehicle according to claim 3, wherein from among the plurality of charging stations, charging stations within a predetermined distance are managed as stations belonging to a single group, and the predetermined charging station is selected from the group.

5. The charging support system for an electric vehicle according to claim 4, wherein a use schedule according to which the predetermined electric vehicle is charged at the predetermined charging station is generated, and then transmitted to the predetermined electric vehicle and the predetermined charging station.

6. The charging support system for an electric vehicle according to claim 5, wherein a charging station, at which a time of waiting for charging and time it takes to complete charging are shortest, is detected as the predetermined charging station, based on the use schedule generated for another predetermined electric vehicle.

7. The charging support system for an electric vehicle according to claim 6, wherein a charting station, which exhibits a probability of being used by an electric vehicle being equal to or higher than a predetermined value, is set to be a station in an operation state, and a charting station exhibiting the probability of being used by an electric vehicle being lower than the predetermined value is set to be a station in an non-operation state, based on a use frequency, calculated for each of the plurality of the charging stations based on the predetermined charging station information acquired from each of the plurality of the charging stations, and the use schedule; and
power supply to the charging station set to be a station in the non-operation state is cutoff.

8. The charging support system for an electric vehicle according to claim 7, wherein,
based on the use frequency, comparison is made for each of the charging stations as to whether a predicted electric vehicle charging amount is larger than the number of charge reserved vehicles of the charging station, and power is supplied to the charging station, when the determination is made that the former is larger than the latter, from a distributed power source capable of supplying the power to the charging station.

9. The charging support system for an electric vehicle according to any one of claims 1 to 8, wherein a warning is transmitted to the predetermined electric vehicle when the current location of the predetermined electric vehicle is deviated from the predetermined path in the predetermined guidance information by a predetermined distance or more.

10. The charging support system for an electric vehicle according to claim 9, wherein a predetermined charging station available for the predetermined electric vehicle as a target of the warning is detected again, and a predetermined path is detected again, with which the predetermined electric vehicle as the target of the warning is guided to the redetected predetermined charging station,
and
predetermined guidance information including the redetected predetermined path is transmitted to the predetermined electric vehicle as the target of the warning.

11. The charging support system for an electric vehicle according to claim 10, wherein
a position, where the predetermined electric vehicle as the target of the warning stops due to battery exhaustion, is predicted, and a mobile charging vehicle including a device for maximizing remaining battery of an electric vehicle is notified of the predicted stop position.

12. A charging support method for an electric vehicle, the method supporting charging to the electric vehicle by using a charging support system and comprising, based on the charging support system:

acquiring predetermined electric vehicle information related to a travel state of the vehicle from among a plurality of electric vehicles;

acquiring predetermined charging station information related to a device state and a use state of the vehicle from among a plurality of charging stations;

detecting a predetermined electric vehicle that needs to be charged to reach a destination from a current location, based on the predetermined electric vehicle information acquired from each of the plurality of the electric vehicles;

detecting a predetermined charging station available for the predetermined electric vehicle from among the plurality of the charging stations, based on the predetermined charging station information and the predetermined electric vehicle information;

detecting a predetermined path for guiding the predetermined electric vehicle to the predetermined charging station; and

transmitting predetermined guidance information including the predetermined path to the predetermined electric vehicle.

**Amended claims under Art. 19.1 PCT**

**1.** A charging support system for an electric vehicle,
the system supporting charging to the electric vehicle,
comprising an information collector for collecting information and a controller for controlling based on information that the information collector collects, wherein:

the controller is configured to:

acquire predetermined electric vehicle information related to a travel state of the vehicle from among a plurality of electric vehicles via the information collector;

acquire predetermined charging station information related to a device state and a use state of the vehicle from among a plurality of charging stations via the information collector;

detect a predetermined electric vehicle that needs to be charged to reach a destination from a current location, based on the predetermined electric vehicle information acquired from each of the plurality of the electric vehicles via the information collector;

detect a plurality of predetermined charging stations available for the predetermined electric vehicle from among the plurality of the charging stations, based on the predetermined charging station information and the predetermined electric vehicle information;

select one predetermined charging station from among the plurality of predetermined charging stations based on a sum of arrival time of the predetermined electric vehicle arriving at the predetermined charging station and time required for charging at the predetermined charging station, and

possibility of the predetermined electric vehicle arriving at the predetermined charging station, and detect a predetermined path for guiding the predetermined electric vehicle to the selected predetermined charging station; and

transmit predetermined guidance information including the predetermined path to the predetermined electric vehicle.

**2.** The charging support system for an electric vehicle according to claim 1, wherein
the controller can detect a plurality of predetermined electric vehicles simultaneously, and
detects the predetermined charging station and the predetermined path for each of the plurality of the predetermined electric vehicles and then transmits them to each of the plurality of the predetermined electric vehicles.

**3.** The charging support system for an electric vehicle according to claim 2, wherein the controller displays the position and power storage amount of the predetermined electric vehicle, the positon and number of vehicles for which charging is reserved at the predetermined charging station, and the predetermined path overlapped on a map.

**4.** The charging support system for an electric vehicle according to claim 3, wherein from among the plurality of charging stations, the controller manages charging stations within a predetermined distance as stations belonging to a single group, and selects the predetermined charging station from the group.

**5.** The charging support system for an electric vehicle according to claim 4, wherein the controller generates a use schedule according to which the predetermined electric vehicle is charged at the predetermined charging station, and then transmits it to the predetermined electric vehicle and the predetermined charging station.

**6.** The charging support system for an electric vehicle according to claim 5, wherein the controller detects a charging station, at which a time of waiting for charging and time it takes to complete charging are shortest, as the predetermined charging station, based on the use schedule generated for another predetermined electric vehicle.

**7.** The charging support system for an electric vehicle according to claim 6, wherein
the controller sets a charting station, which exhibits a probability of being used by an electric vehicle being equal to or higher than a predetermined value, to be a station in an operation state, and sets a charting station exhibiting the probability of being used by an electric vehicle being lower than the predetermined value to be a station in an non-operation state, based on a use frequency, calculated for each of the plurality of the charging stations based on the predetermined charging station information acquired from each of the plurality of the charging stations, and the use schedule; and
cuts off power supply to the charging station set to be a station in the non-operation state.

**8.** The charging support system for an electric vehicle according to claim 7, wherein,
based on the use frequency, the controller makes comparison for each of the charging stations as to whether a predicted electric vehicle charging amount is larger than the number of charge reserved vehicles of the charging station, and supplies power to the charging station, when the determination is made that the former is larger than the latter, from a distributed power source capable of supplying the power to the charging station.

**9.** The charging support system for an electric vehicle according to any one of claims 1 to 8, wherein the controller transmits a warning to the predetermined electric vehicle when the current location of the predetermined electric vehicle is determined to be deviated from the predetermined path in the predetermined guidance information by a predetermined distance or more.

**10.** The charging support system for an electric vehicle according to claim 9, wherein the controller detects a predetermined charging station available for the predetermined electric vehicle as a target of the warning again, and detects a predetermined path again, with which the predetermined electric vehicle as the target of the warning is guided to the redetected predetermined charging station, and
transmits predetermined guidance information including the redetected predetermined path to the predetermined electric vehicle as the target of the warning.

**11.** The charging support system for an electric vehicle according to claim 10, wherein
the controller predicts a position, where the predetermined electric vehicle as the target of the warning stops due to battery exhaustion, and
notifies a mobile charging vehicle including a device for maximizing remaining battery of an electric vehicle of the predicted stop position.

**12.** A charging support method for an electric vehicle, the method supporting charging to the electric vehicle by using a charging support system, the system comprising an information collector for collecting information and a controller for controlling based on information that the information collector collects, wherein:

the controller is configured to
acquire predetermined electric vehicle information related to a travel state of the vehicle from among a plurality of electric vehicles via the information collector;
acquire predetermined charging station information related to a device state and a use state of the vehicle from among a plurality of charging stations via the information collector;
detect a predetermined electric vehicle that needs to be charged to reach a destination from a current location, based on the predetermined electric vehicle information acquired from each of the plurality of the electric vehicles via the information collector;
detect a plurality of predetermined charging stations available for the predetermined electric vehicle from among the plurality of the charging stations, based on the predetermined charging station information and the predetermined electric vehicle information;
select one predetermined charging station from among the plurality of predetermined charging stations based on a sum of arrival time of the predetermined electric vehicle arriving at the predetermined charging station and time required for charging at the predetermined charging station, and
possibility of the predetermined electric vehicle arriving at the predetermined charging station, and
detect a predetermined path for guiding the predetermined electric vehicle to the selected predetermined charging station;.

# FIG. 1

Fig. 2

110

Common I/F 213

207
Data tendency analysis 208
Data distribution analysis 209
Filtering 210
Environmental analysis 211

Data search 206
Primary memory 204
Secondary memory 205

GIS 212

Map 216
Facility 217

Sensor data management 202
Guidance control data management 203

Weather 220
Power 219
Station 218
Control 215
Stream 214

Information control system adapter 201

120
EV information collection 121
Station information collection 122
Power information collection 123
Environmental information collection 124
EV guidance 125
Station control 126
Power control 127

FIG. 3

EV guidance application system 140

Common I/F

EV data search 143

EV data management 142

EV data memory 148

EV selection 144

EV travel time calculation 145

EV travel prediction 146

EV guidance confirmation 147

141

EP 2 894 436 A1

FIG. 4

EP 2 894 436 A1

Charging station use application system  150

Charging station
data search  153

Charging station
data management  152

Charging station
use data memory  158

Common I/F

151

Charging station
data selection  154

Preference DB  157

Charging station use
schedule change  155

Charging station
use evaluation  156

37

FIG. 5

Regional power control application system 160

Common I/F 161

Power data search 163

Power data management 162

Power data memory 168

Weather data search 166

Weather data management 165

Weather data memory 169

Power supply calculation 164

Weather analysis 167

EP 2 894 436 A1

# FIG. 6

Display application system 130

| 131 | 132 | 133 |
|---|---|---|
| Common I/F | Display data generation | Display screen |

# FIG. 7

```
                    ┌─────────────────────────────────────┐
                    │        EV guidance processing        │
                    └─────────────────────────────────────┘
    ┌───┐                              │
    │ A │──────────────────────────────┤
    └───┘                              ▼
      │            ┌─────────────────────────────────────┐  S10
      │            │        Receive regional data         │
      │            └─────────────────────────────────────┘
      │                              │
      │            ┌─────────────────────────────────────┐  S11
      │            │ Transmit acquired data to information │
      │            │           control system             │
      │            └─────────────────────────────────────┘
      │                              │
      │  Yes                         ▼                       S12
      └────────────< Within data acquisition period? >
                                     │ No
                    ┌─────────────────────────────────────┐  S13
                    │       Store sensor data in memory     │
                    └─────────────────────────────────────┘
                                     │
                    ┌─────────────────────────────────────┐  S14
                    │  Store sensor data in stream history DB │
                    └─────────────────────────────────────┘
                                     │
                    ┌─────────────────────────────────────┐  S15
                    │             Sample data              │
                    └─────────────────────────────────────┘
                                     │
                    ┌─────────────────────────────────────┐  S16
                    │        Store sampled data in DB       │
                    └─────────────────────────────────────┘
                                     │
                    ┌─────────────────────────────────────┐  S17
                    │      Search for similar weather data  │
                    └─────────────────────────────────────┘
                                     │
                                   ┌───┐
                                   │ B │
                                   └───┘
```

# FIG. 8

B

Search charging station use history — S18

Analyze power data history — S19

Analyze weather measurement data — S20

Calculate area of traffic congestion — S21

Select EV data to be transmitted — S22

Calculate path for EV — S23

Transmit sensor data to EV guidance application system — S24

Receive data at EV guidance application system — S25

Predict EV location — S26

C

# FIG. 9

C

Transmit EV related data to Display application system — S27

Search for EV — S28

Calculate EV travel time and remaining amount of power — S29

Select EV to be guided — S30

Has determination been made on all EVs? — S31

No

Yes

Search for path to charging station — S32

Has calculation been performed on all available stations? — S33

No

Yes

Transmit guidance data to charging station use application system — S34

Receive data at charging station use application system — S35

D

# FIG. 10

D

Set priorities to selected charging stations — S36

Verify possibility of EV reaching charging station — S37

Is there available station? — S38

Yes

No

Transmit alert to vehicle control system — S39

Calculate time required to reach charging station and charging time — S40

Set schedule for charging station — S41

Has schedule been set for all guidance target EVs? — S42

No

Yes

Reselect charging station — S43

E

# FIG. 11

E

S44

Evaluate charging station use scheduling

S45

Transmit charging station use scheduling result to control system

A

# FIG. 12

| EV data   D10 |
|---|
| ID |
| Latitude |
| Longitude |
| Remaining amount of power |
| Transmittance start time |
| Speed |
| Steering angle |
| Rechargeable amount |
| EV guidance related data |
| Vehicle specification |

| Charging station data   D11 |
|---|
| ID |
| Latitude |
| Longitude |
| Use identification code |
| Use reservation data |
| Equipment specification |

| Power data   D12 |
|---|
| Power storage ID |
| Latitude |
| Longitude |
| Connection equipment code |
| Power storage amount |
| Rechargeable amount |
| Power generation specification |
| Power storage device specification |

| Weather measurement data   D13 |
|---|
| ID |
| Latitude |
| Longitude |
| Sensor type |
| Measured value |
| Sensor specification |

FIG. 13

# FIG. 14

| Guidance table   T10 |
|:---:|
| ID |
| Guidance state |
| Guidance destination charging station ID |
| Guidance path<br><br>(x1, y1)<br>(x2, y2)<br>(x3, y3)<br><br>⋮ |
| Arrival time |
| Guidance destination charging station ID |
| Guidance path |
| Arrival time |
| Guidance destination charging station ID |
| Guidance path |
| Arrival time |

C100
C101
C102
C103
C104
C102
C103
C104
C102
C103
C104

⋮

# FIG. 15

Information control system

Fig. 16

Information control system

FIG. 17

Information
control system

FIG. 18

EV guidance ignoring determination processing

Acquire information on guided EV and guidance path — S50

Calculate distance between location of guided EV and guidance path — S51

Determine whether ignoring has occurred — S52

Yes

No

Check with ignoring EV — S53

Has processing been performed on all EVs? — S54

No

Yes

END

FIG. 19

# FIG. 20

```
┌─────────────────────────────────────┐
│  Power demand prediction and charging│
│         station deployment           │
└─────────────────────────────────────┘
                  │
                  ▼
┌─────────────────────────────────────┐   S60
│  Acquire and store predetermined     │
│         history information           │
└─────────────────────────────────────┘
                  │
                  ▼
┌─────────────────────────────────────┐   S61
│         Predict power demand          │
└─────────────────────────────────────┘
                  │
                  ▼
┌─────────────────────────────────────┐   S62
│ Transmit data to charging station    │
│           application                 │
└─────────────────────────────────────┘
                  │
                  ▼
┌─────────────────────────────────────┐   S63
│ Receive data at charging station     │
│           application                 │
└─────────────────────────────────────┘
                  │
   ( H ) ────────▶│
                  ▼
┌─────────────────────────────────────┐   S64
│  Search for charging station use      │
│            frequency                  │
└─────────────────────────────────────┘
                  │
                  ▼
          ⬡ Determine                        S65
            increase/decrease in demand   ────────▶ Decreased
            for charging station
                  │                                    │
              Increased                                ▼
                  │                          ┌───────────────────────┐  S67
   S66            │                          │ Deal with decreasing   │
                  ▼                          │       demand            │
┌─────────────────────────┐                 └───────────────────────┘
│ Deal with increasing     │                            │
│       demand             │                            ▼
└─────────────────────────┘                          ( G )
                  │
                  ▼
                ( F )
```

# FIG. 21

H

F        G

S68
No ⟨Has processing been performed on all stations?⟩

Yes

Set charging station use schedule again    S69

Transmit data to charging station control system    S70

Check state (operated/stopped) of charging station    S71

Generate data for controlling state of charging station    S72

Transmit control data to information control system    S73

Control state of charging station    S74

END

```
                    ┌─────────────────────────────────┐
                    │      Regional power control      │
                    └─────────────────────────────────┘
                                     │
                                     ▼
        ┌─────────────────────────────────────────────────┐        S80
        │        Receive power control information         │
        └─────────────────────────────────────────────────┘
                                     │
                                     ▼
        ┌─────────────────────────────────────────────────┐        S81
        │        Display power control information         │
        └─────────────────────────────────────────────────┘
                                     │
                                     ▼
        ┌─────────────────────────────────────────────────┐        S82
        │      Determine region requiring power supply     │
        └─────────────────────────────────────────────────┘
                                     │
                                     ▼
        ┌─────────────────────────────────────────────────┐        S83
        │            Determine power supply unit           │
        └─────────────────────────────────────────────────┘
                                     │
                                     ▼
                             (   END   )
```

# FIG. 22

# FIG. 23

（a）Path calculation result

103G

102A

106C

102B

（b）Path recalculation result

102B

106D

102A

103G

FIG. 24

Service system

Receive notification — S107

Prepare for rescue — S108

Receive call — S109

Rescue — S110

END

Vehicle stop management

Calculate stop probability PP and stop position — S100

PP > predetermined value? — S101
No → END
Yes ↓

Send notification to service system — S102

Transmit warning — S103

END

EV

Receive warning — S104

Stop due to power shortage — S105

Call for rescue — S106

END

EP 2 894 436 A1

## INTERNATIONAL SEARCH REPORT

| | International application No. |
|---|---|
| | PCT/JP2012/072306 |

A. CLASSIFICATION OF SUBJECT MATTER

*G01C21/34*(2006.01)i, *B60L3/00*(2006.01)i, *B60L11/18*(2006.01)i, *G06Q50/10* (2012.01)i, *G08G1/137*(2006.01)i

According to International Patent Classification (IPC) or to both national classification and IPC

B. FIELDS SEARCHED

Minimum documentation searched (classification system followed by classification symbols)
G01C21/34, B60L3/00, B60L11/18, G06Q50/10, G08G1/137

Documentation searched other than minimum documentation to the extent that such documents are included in the fields searched

| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | WO 2011/121790 A1 (Pioneer Corp.),<br>06 October 2011 (06.10.2011),<br>paragraphs [0015] to [0032], [0037] to [0041],<br>[0058] to [0063]; all drawings<br>(Family: none) | 1,2,12<br>3-6,9-11<br>7-8 |
| X<br>Y<br>A | JP 2011-185785 A (Hitachi Automotive Systems,<br>Ltd.),<br>22 September 2011 (22.09.2011),<br>paragraphs [0059] to [0070]; fig. 16<br>& EP 2365285 A2      & CN 102192755 A | 1,2,12<br>3-6,9-11<br>7-8 |
| Y | JP 2011-27433 A (Alpine Electronics, Inc.),<br>10 February 2011 (10.02.2011),<br>paragraphs [0025] to [0026], [0032] to [0042];<br>all drawings<br>(Family: none) | 3-6,9-11 |

☒ Further documents are listed in the continuation of Box C.   ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 20 November, 2012 (20.11.12) | 04 December, 2012 (04.12.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

58

## INTERNATIONAL SEARCH REPORT

| | International application No. |
|---|---|
| | PCT/JP2012/072306 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2011-214930 A  (Honda Motor Co., Ltd.),<br>27 October 2011 (27.10.2011),<br>paragraphs [0065] to [0079]; fig. 5 to 7<br>(Family: none) | 3-6,9-11 |
| Y | JP 2011-248514 A  (Toyota Industries Corp.),<br>08 December 2011 (08.12.2011),<br>paragraphs [0019] to [0021], [0036] to [0038];<br>all drawings<br>(Family: none) | 3-6,9-11 |
| Y | JP 2011-252816 A  (Nihon Unisys, Ltd.),<br>15 December 2011 (15.12.2011),<br>paragraphs [0040] to [0041]; fig. 4<br>(Family: none) | 3-6,9-11 |
| Y | JP 2003-262525 A  (Nissan Motor Co., Ltd.),<br>19 September 2003 (19.09.2003),<br>paragraphs [0031] to [0032]; fig. 7<br>(Family: none) | 3-6,9-11 |
| Y | JP 2010-231258 A  (NEC Corp.),<br>14 October 2010 (14.10.2010),<br>paragraphs [0024] to [0027], [0032] to [0044];<br>all drawings<br>(Family: none) | 5-6,9-11 |
| Y | JP 2011-203174 A  (Denso Corp.),<br>13 October 2011 (13.10.2011),<br>paragraphs [0014], [0018], [0022], [0025] to<br>[0040]; all drawings<br>(Family: none) | 5-6,9-11 |
| Y | JP 2011-193547 A  (Honda Motor Co., Ltd.),<br>29 September 2011 (29.09.2011),<br>paragraphs [0081], [0146]; fig. 9<br>(Family: none) | 11 |
| A | JP 2012-48286 A  (Hitachi, Ltd.),<br>08 March 2012 (08.03.2012),<br>entire text; all drawings<br>& CN 102377220 A | 1-12 |

Form PCT/ISA/210 (continuation of second sheet) (July 2009)

**EP 2 894 436 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010161912 A
- JP 2002123888 A
- JP 2011050240 A